(19) **Europäisches Patentamt / European Patent Office / Office européen des brevets**

(11) **EP 1 729 145 B1**

(12) **EUROPEAN PATENT SPECIFICATION**

(45) Date of publication and mention
of the grant of the patent:
**07.08.2013   Bulletin 2013/32**

(51) Int Cl.:
*G01S 19/20* (2010.01)

(21) Application number: **05076289.7**

(22) Date of filing: **02.06.2005**

(54) **Method and system for providing GNSS navigation position solution with guaranteed integrity in non-controlled environments**

Verfahren und Vorrichtung zum Bereitstellen von GNSS Positionslösungen mit garantierter Integrität in nicht kontrollierten Umgebungen

Procédé et système permettant de fournir la solution de position GNSS avec une intégrité garantie dans un environnement non contrôlé

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**06.12.2006   Bulletin 2006/49**

(73) Proprietor: **GMV Aerospace and Defence S.A.
Tres Cantos, 28760 Madrid (ES)**

(72) Inventors:
*   **Torledo Lopez, Manuel**
    **28760 Tres Cantos - Madrid (ES)**
*   **Martinez Olagüe, Miguel Angel**
    **28760 Tres Cantos - Madrid (ES)**
*   **Cosmen Schortmann, Joaquin**
    **28760 Tres Cantos - Madrid (ES)**
*   **Hernandez Médel, Carlos**
    **28760 Tres Cantos - Madrid (ES)**
*   **Lopez Almansa, José Maria**
    **28760 Tres Cantos - Madrid (ES)**
*   **Martin Piedelobo, Juan Ramon**
    **28760 Tres Cantos - Madrid (ES)**
*   **Romay Merino, Miguel**
    **28760 Tres Cantos - Madrid (ES)**
*   **Zarraoa Lopez, Néstor**
    **28760 Tres Cantos - Madrid (ES)**

(74) Representative: **Stiebe, Lars Magnus et al
Balder IP Law, S.L.
Paseo de la Castellana 120
28046 Madrid (ES)**

(56) References cited:
**US-A- 5 917 445        US-A- 6 151 551
US-A1- 2002 050 944    US-B1- 6 691 066**

*   **T. WALTER AND P. ENGE: "Weighted RAIM for Precision Approach" PROCEEDINGS OF ION GPS 95, September 1995 (1995-09), pages 1995-2004, XP002351332**
*   **H. K. LEE ET AL: "GPS Multipath Detection Based on Sequence of Successive-Time Double-Differences" IEEE SIGNAL PROCESSING LETTERS, vol. 11, no. 3, March 2004 (2004-03), pages 316-319, XP002351333**
*   **W. MICHALSON AND H. HUA: "GPS Carrier-Phase RAIM" PROCEEDINGS OF ION GPS 95, September 1995 (1995-09), pages 1975-1984, XP002351334**
*   **B. S. PERVAN ET AL: "Autonomous Fault Detection and Removal Using GPS Carrier Phase" IEEE TRANSACTIONS ON AEROSPACE AND ELECTRONIC SYSTEMS, vol. 34, no. 3, July 1998 (1998-07), pages 897-906, XP002351335**

## Description

Field of the invention

The present invention lies in the field of Global Navigation Satellite Systems (GNSS) receivers and/or GNSS-based applications.

The present invention can be applied in a wide diversity of fields, whenever position/velocity information is used between two parties with liability (either legal, administrative or economical) implications.

Background of the invention

It has been found that Global Navigation Satellite Systems (GNSS), as the one currently available GPS, or the Galileo system in the future, have a great diversity of applications. Among others, their use to monitor localization of mobile agents (vehicles, individuals, assets, etc.) has proliferated. In many applications, mobile agents positions are made available in a central platform to exploit that information with different specific applications.

Future applications are expected to use position information not only to improve their operational efficiency, but also as a proof to elucidate economical or liability issues between parties. Each position data record should be guaranteed to be within required accuracy limits, otherwise one affected party could reject the validity of information. In current systems it is assumed that position information error is within required limits for the application for which it is used based on error statistics. However, the user of the information does not have any guarantee that the error in a particular position record is within specific boundaries. In other words, although error statistics could be within acceptable limits, one particular position record may have an error out of acceptable limits for the application.

Examples of these new so-called *liability critical* applications are:

➢ Position dependant billing systems: applications for automatic tolling, road pricing, congestion control, zone fees, city parking tolling, etc. It should be guaranteed that the position derived for billing is based upon information, which is error bounded. Thus the probability of having billing claims due to unbounded errors is controlled to a required level.
➢ Position dependant law enforcement systems: whenever position and velocity information is used as evidence with administrative or legal implications, the involved parties should be guaranteed with an error-bounded position evidence. This can be for instance applied to traffic law enforcement as well as surveillance of parolees.
➢ Position dependant tax collection: whenever position, velocity and time information is used as the basis for tax collection, for instance, for road and urban areas where specific taxes policies can be implemented.
➢ Fleet Management Systems: fleet management system where position is recorded and used as evidence to solve disputes with clients or employees; then, an error-bounded position evidence should be provided.

A key aspect for those liability critical applications is the estimation of the referred guaranteed position error. In the field of Global Navigation Satellite System (GNSS), this guarantee is measured by the so called integrity that is an essential navigation performance for various applications in particular for safety critical ones. The integrity concept is well defined and applied in civil aviation. Integrity is understood as a measure of the trust that can be placed in the correctness of the information supplied by the system. In practical terms, the lack of integrity can be understood as the fact that the positioning and/or timing error exceeds a predefined threshold and the system is silent beyond a given time to alert which is dependant on the intended system application. The integrity mechanisms are hence usually aimed to provide an upper bound of the positioning and/or timing errors with the requested probability. This probability is commensurate with the type of application.

Ensuring the integrity of the navigation solution embraces today mainly four types of solutions (with substantial differences in their resulting performance):

- RAIM (Receiver Autonomous Integrity Monitoring) algorithms implemented at user level (a technology developed to assess the integrity of GPS signals in a GPS receiver system).
- Implementation of ground systems that monitor the integrity of the GNSS Signal in Space, as it is the case of Space Based Augmentation Systems (SBAS) and Ground Based Augmentation Systems (GBAS).
- Combinations of the two above.
- Sensors hybridation: e.g. GPS integrated with inertial navigation.

Receiver antennae technology is available to mitigate the effect of multipath and "alternate path" (i.e. circumstances where only the reflected signal is received).

As indicated above, methods and algorithms for computing the integrity of the user navigation solution are today largely available based mainly on both RAIM algorithms and information provided by the GNSS Signals; e.g.

computation of Protection Levels based on the information provided by the SBAS Signal in Space according to SBAS Minimum Operational Performance Standards (MOPS). The reference in the aeronautical field as navigation and integrity algorithms that will be considered as basis for innovation is the SBAS navigation (EGNOS in Europe and WAAS in United states), which follows the MOPS standard for navigation and integrity, in particular for Precision Approach modes when the integrity of the navigation solution is checked or validated by a parallel RAIM algorithm. While the MOPS standard does not describe a particular RAIM algorithm, the weighted RAIM for SBAS precision approach navigation described in "Weighted RAIM for precision approach" T. Walter, P. Enge, ION GPS (1995) will be considered as reference.

Major limitations of the existing methods are that they are based on certain assumptions that while valid for some applications (e.g. in Civil Aviation) they cannot be verified when the receiver is working in non-controlled environments, as it is the case of urban and, in general, terrestrial applications.

Such assumptions are based on "a *priori*" information on the quality of the measurements, which is not cross-checked with the real conditions measured by the receiver and which do not take into account the effect of uncontrolled error sources. This is the case of the standard RAIM technology that is being widely used with standardized specifications in the aeronautical field. This technique implies a set of assumptions that are valid in the aeronautical field including:

- RAIM algorithms make the assumption of single failure: only one measurement in view will fail, while the other measurements have a nominal behaviour. The source of the single failure is assumed to be a failure of one satellite transmitting the signal, a sufficiently rare event to happen only to a single satellite.
- The nominal behaviour is characterised "a *priori*" by a noise level in the Satellites Navigation pseudorange measurements. This "a *priori*" noise level corresponds to a permanent measurements model noise that characterises the clean scenario. In GPS, before the year 2000 this model corresponded to the Selective Availability as the dominant noise, having all the satellites a noise level of about 30 m. Since the year 2000 the pseudorange measurements have reduced their noise level drastically to low values, but they are a function of the elevation and other parameters. The "a *priori*" measurement noise model of GPS case can be found in "Analysis performed in support of the ad hoc working group of RTCA SC-159 on RAIM/FDE issues", Y.C. Lee, K.L. Van Dyke, in Proc. National Technical Meeting ION, ION NTM 2002 (Jan 2002), while the *"a priori"* measurement noise model of the case with SBAS corrections is described in "Minimum operational performance standards for GPS/WAAS Airborne Equipment", RTCA/DO-229C (28/11/2001).

These two hypotheses are not applicable in urban and road environments. In these scenarios, the dominant sources of error in the satellite measurements are the local effects, in the vicinity of the receiver, mainly the multipath and the direct reflected signals (tropospheric errors are already accounted in the mentioned MOPS standard). In contrast to the scarcely single satellite failure, this effect acts continuously over several satellites, with a very variable error magnitude up to tenths of meters. This makes the single failure hypothesis and the *"a priori"* pseudorange measurements noise model not applicable.

In urban environment two types of main errors have to be considered: the "multipath" where the signal is composed of the direct and the reflected signals, and also the common case when only a single error-reflected copy reaches the receiver. For the sake of simplification the general term "multipath" is used along this document to refer to these two types of errors; whenever necessary the term will be characterised to refer to one or the other effect. The mitigation methods at HW level in high performances receivers are being highly effective for the composed signal (multipath) while they cannot detect the case of the single reflected signal. In addition, the pseudorange smoothing methods are also capable of partially dampening the multipath in the composed signal taking advantage of the different behaviour of the carrier phase and the pseudorange observables. However for the single reflected signal the pseudorange and carrier phase are consistent and these pseudorange smoothing filters are not applicable.

Another factor to be considered is the different multipath behaviour depending on the receiver dynamics. In static receivers both types of multipath are perceived in first approach as bias, while the receiver dynamics makes the composed multipath to be seen in first approach as noise (measurements in locations more distant than one wavelength are de-correlated) and in the case of the single reflected signal, the Doppler effect due to the projection of the receiver velocity in the signal path is different than in the line of sight of the expected nominal signal.

It is worth mentioning that, despite largely applied multipath techniques that are mainly devoted to multipath mitigation, integrity related algorithms mainly focus in the detection and bounding of errors rather in the mitigation itself as residual errors will be very difficult to bound.

Moreover current integrity computation methods are focused on safety critical applications, which implies that a real time solution (integrity assessed every epoch for each computed navigation solution and delivered at that epoch) and the not use of sequential filters are a must.

Integrity of Maps data is still an open issue, implying that map-matching technologies cannot be used as a means for improving the solution integrity.

These limitations of the state of the art precludes the GNSS applications for the so called "liability critical applications" in non-controlled environments.

As indicated above, these liability critical applications have in common that unbounded navigation errors could imply errors with direct impact in commercial or legal aspects, e.g. erroneous charging for the use of certain infrastructure (in the case of road pricing) or erroneous fines for speeding (in the case of traffic law enforcement applications).

Trying to synthesize the case of *liability critical* applications:

[a] In the legal, contractual and commercial fields there are situations where GNSS position or velocity data are used as evidence to prove or solve a particular issue.

[b] GNSS position or velocity data are subject to errors, which means that the difference between the provided position or velocity and the actual position and velocity is not null and its magnitude cannot be predetermined.

[c] GNSS position and velocity accuracy, defined as the statistically determined standard deviation of GNSS position and velocity error, does not guarantee that the individual GNSS position and velocity data be within certain error boundaries.

[d] The Integrity concept has been used for a long time in safety critical navigation sensors, and in particular in GNSS safety critical application, where GNSS position or velocity error can put into risk the life of individuals. This magnitude establishes the probability for the measurement device to provide data with an error superior to pre-established error boundaries without informing the user of such a situation.

[e] As a result, it is not the statistical determined accuracy of the measurement but its Integrity that should determine if a particular GNSS position or velocity can or cannot be used as evidence.

Summary of the invention

The present invention aims at ensuring the integrity of the navigation solution (position, velocity and time) provided by GNSS systems, even in non-controlled environments, such as urban areas or roads, thereby increasing the field of application of integrity related applications.

The invention thus refers to a method for providing a GNSS navigation position solution with guaranteed integrity in non-controlled environments according to claim 1 and to a system to provide a GNSS navigation position solution with guaranteed integrity in non-controlled environments according to claim 13. Preferred embodiments of the method and system are defined in the dependent claims.

A first aspect of the present invention relates to a method for providing a Global Navigation Satellite System (GNSS) navigation position solution with guaranteed integrity in non-controlled environments, said guaranteed integrity based on protection levels, which method comprises:

- processing a Global Navigation Satellite System (GNSS) signal to obtain carrier phase and pseudoranges measurements,
- carrying out a pre-processing of said measurements in order to detect and characterize local errors in said measurements, said characterization including providing error bounds, and providing a set of measurements rejections when said characterization is not possible;
- using said error bounds in a weighted Receiver Autonomous Integrity Monitoring (RAIM) algorithm in order to compute position coordinates and associated protection levels.

The method detects and excludes wrong measurements e.g. either with large multipath or subject to reflections, that invalidates the main assumptions required for the computation of Protection Levels derived from a GNSS system with guaranteed signal integrity (as it is the case of SBAS; GBAS, Galileo and/or GPS III in the future).

Said detection and characterization of local errors preferably comprises using traditional carrier phase step detectors and cycle slip detectors together with a carrier phase RAIM algorithm, for the detection and characterization of reflected signal errors.

Also, said detection and characterization of local errors preferably comprises using improved pseudoranges smoothing technologies and error variance estimation, for the detection and characterization of multipath errors.

Preferably, local pseudorange errors (multipath and receiver noise) are characterized in terms of associated variance: measurements with excessive multipath errors are excluded for later computations and multipath is bounded in valid measurements.

Said weighted RAIM algorithm preferably computes the associated protection levels based on real-time pseudoranges weights updates taking into consideration said characterization of measurements.

Said weighted RAIM algorithm preferably computes the associated protection levels considering the possibility of multiple failed measurements.

Preferably, ionospheric errors are compensated based on two frequency measurements.

Smoothed pseudoranges are preferably computed based on a real-time filter.

The computed position and protection levels is preferably combined with external GIS information related to roads and streets, checked to ensure its integrity; said external information may be related to the topography of the surface (3D information).

According to a preferred embodiment, the method preferably comprises using a Carrier Phase RAIM algorithm, based on inconsistencies between the observed Doppler effect in the accumulated Carrier Phase measurements and the velocity vector, in order to ensure detection and exclusion of multipath reflected measurements and to compute velocity and associated protection levels. Said algorithm modifies the classical weighted RAIM formulation for pseudoranges, redefining for the carrier phase the measurements vector Z, the observation matrix H, and the measurements noise matrix R as follows:

- the measurement term Z is the difference between the measured and estimated accumulated carrier phase measurement:

$$\bar{Z} = \left\{ \begin{matrix} \vdots \\ \Delta\tilde{\Phi}^J - \Delta\hat{\Phi}^j \\ \vdots \end{matrix} \right\}$$

where the estimated accumulated carrier phase measurement is:

$$\Delta\hat{\Phi}^J = \left\{ \begin{matrix} \hat{\rho}_i^{J^-}(t)\Big|_{\Delta\bar{x}(t)=\bar{0}} - \hat{\rho}^J(t-\Delta t) + c(\tilde{B}_i^-(t) - \tilde{B}(t-\Delta t)) \\ - c(dt^J(t) - dt^J(t-\Delta t)) \\ + (T^J(t) - T^J(t-\Delta t)) - (I^J(t) - I^J(t-\Delta t)) \\ + CS(\Delta t) \end{matrix} \right. ;$$

- each row $hj$ of the observation or information matrix $H$ is, as usual, the partial derivate of the measurement equation with respect to the state vector, recalculated as the measurements and state vector are different than in the classical positioning RAIM with pseudoranges:

$$h_J = \left[ \frac{\partial(\Delta\Phi^J)}{\partial\bar{X}}\bigg|_{\bar{X}_i^-(t)}, \quad \frac{\partial(\Delta\Phi^J)}{\partial(\Delta B)}\bigg|_{B_i^-(t)} \right] = \left[ -\frac{\bar{X}^J(t)^T - \bar{X}_i^-(t)}{\left|\bar{X}^J(t)^T - \bar{X}_i^-(t)\right|}, \quad 1 \right];$$

- each term in the measurement noise matrix R, used to build the weight matrixes, is now defined by the noise of the *"a priori"* nominal accumulated carrier phase measurement, which are dominated by the difference of multipath between epochs that can be as high as a quarter of wavelength, as cycle slips are considered identified in previous pre-processing steps and other terms have a negligible evolution along the carrier phase accumulation period; therefore the value of the noise of each carrier phase measurement can be considered as:

$$R_{jj} = \sigma_J = \frac{2}{3}\left(\frac{\lambda}{4}\right) = \frac{\lambda}{6}.$$

According to another preferred embodiment, the method uses an algorithm that, based in the time correlation of the multipath error, characterizes the local pseudorange errors -multipath and receiver noise- in terms of associated variance, wherein measurements with excessive multipath errors are excluded for later computations and multipath is mitigated in valid measurements. The algorithm comprises the following steps:

- for each active satellite "i", compute the snapshot carrier phase non-integer ambiguity $N_i(t_k)$, comparing the iono-free pseudorange $\rho_{i,iono-free}(t_k)$ and carrier phase measurements $\Phi_{i,iono-free}(t_k)$ for the current epoch:

$$N_i(t_k) = \rho_{i,iono-free}(t_k) - \Phi_{i,iono-free}(t_k)$$

- update the buffer of ambiguities by removing the oldest one, if the buffer is full, and adding the above computed ambiguity, if the number of ambiguities is above a certain minimum number ($N_{min}$), the filter can provide the expected outputs;
- if the user is in initialisation mode, compute the average of the stored ambiguities ($\tilde{N}_i(tk)$) as

$$\tilde{N}_i(t_k) = \frac{1}{M} \sum_{l=0}^{M-1} N_i(t_{k-l})$$

and set up the covariance of the residual error of the smoothed pseudorange $(\sigma^2_{i,smoothed}(t_k))$ equal to the a-priori specified value

$$\sigma^2_{i,smoothed}(t_k) = \sigma^2_{0,noise} \; ;$$

- if the user velocity becomes greater than a certain minimum value ($V_{user,min}$) for at least a certain minimum time ($T_{min}$), compute first the parameter F that defines the Gauss-Markov process

$$N_i(t_k) = F_i \cdot N_i(t_{k-1}) + w_{i,k} \quad w_{i,k} \in N\left(0, \sqrt{1-F_i^2} \cdot \sigma_{i,noise}\right)$$

that modelizes the time correlation of the multipath error, then the estimated ambiguity $\tilde{N}_i(t_k)$, and finally the covariance of the residual error of the smoothed pseudorange $\sigma^2_{i,smoothed}(t_k)$ by means of a weighted average scheme as follows:

F is estimated by means of a least-square estimator:

$$\tilde{F} = \left[A^T \cdot A\right]^{-1} \cdot A^T \cdot B$$

where:

$$A = \begin{bmatrix} N_i(t_{k-M+1}) \\ N_i(t_{k-M+2}) \\ \cdots \\ N_i(t_{k-1}) \end{bmatrix} \quad B = \begin{bmatrix} N_i(t_{k-M+2}) \\ N_i(t_{k-M+3}) \\ \cdots \\ N_i(t_k) \end{bmatrix} \text{ and } B = A \cdot \tilde{F} ;$$

then the estimated ambiguity is obtained by means of the weighted average as follows:

$$\tilde{N}_i(t_k) = \frac{N_i(t_k) + N_i(t_{k-M+1}) + (1-\tilde{F}_i) \cdot \sum_{l=1}^{M-2} N_i(t_{k-l})}{M \cdot (1-\tilde{F}_i) + 2 \cdot \tilde{F}_i}$$

and the covariance of the residual error of the smoothed pseudorange is:

$$\sigma^2_{i,smoothed}(t_k) = \frac{\sigma^2_{i,measurement\ noise}(t_k)}{IS_i(t_k)}$$

where the noise variance of the measured ambiguity is estimated by means of a chi-square $\chi^2_{M-2,\%CL}$ distribution assuming M-2 degrees of freedom and a requested confidence level (CL):

$$\tilde{\sigma}^2_{i,measurement\ noise}(t_k) = \frac{1}{(1-\tilde{F}^2_i)\cdot\chi^2_{M-2,\%CL}}\cdot\sum_{j=0}^{M-2}\left(N_i(t_{k-j})-\tilde{F}_i\cdot N_i(t_{k-j-1})\right)^2$$

and the equivalent number of independent samples (ISi(tk)) is estimated accordingly by means of the following expression:

$$IS_i(t_k) = \frac{M\cdot(1-F_i)+2\cdot F_i}{1+F_i} \quad ;$$

- if the user velocity becomes lower than the minimum value then the ambiguity is fixed to the one for which the velocity took that value (epoch "tV min"):

$$\tilde{N}_i(t_k) = \tilde{N}_i(t_{V\min})$$

$$\sigma^2_{i,smoothed}(t_k) = \sigma^2_{i,smoothed}(t_{V\min})$$

while the filter continues working estimating the bias $MBias_i(t_k)$ caused by the multipath as difference between the average of the ambiguity and the reference fixed ambiguity:

$$\tilde{N}_{i,biased}(t_k) = \frac{\sum_{l=0}^{M-1}N_i(t_{k-l})}{M}$$

$$S^2_{i,biased}(t_k) = \frac{\sum_{l=0}^{M-1}\left(N_i(t_{k-l})-\tilde{N}_{i,biased}(t_k)\right)^2}{M}$$

$$\sigma^2_{i,biased}(t_k) = \frac{1}{M-1}\cdot\left(S_{i,biased}(t_k)\cdot\frac{t_{M-1,md}}{K_{N,md}}\right)^2$$

$$MBias_i(t_k) = \tilde{N}_i(t_{V\min})-\tilde{N}_{i,biased}(t_k)$$

$$\sigma_{i,MBias}^2(t_k) = \sigma_{i,biased}^2(t_k) + \sigma_{i,smoothed}^2(t_{V\min})$$

with $t_{M-1,md}$ the point of the t-Student distribution with "M-1" degrees of freedom that leaves in the tails (two-tail problem) a probability equal to the missed detection probability (md) assigned to the whole RAIM algorithm and being $K_{N,md}$ the point of the Gaussian distribution, zero mean and variance equal to 1, that leaves in the tails (two-tail) problem a probability equal to the missed detection probability assigned to the whole RAIM algorithm;

- if there is a cycle slip, the smoothing filter is reset and the buffer of stored snapshot ambiguities is deleted; a new output is provided when the number of new stored ambiguities reaches a minimum and additionally if the user velocity is below the minimum, the first new biased ambiguity is corrected with the latest computed bias and then it is fixed:

$$\tilde{N}_i(t_{after\,cycle\,slip}) = \tilde{N}_{i,biased}(t_{i,cycle\,slip} + \Delta t_{\min}) + MBias_i(t_{i,cycle\,slip} - 1)$$

$$\sigma_{i,smoothed}^2(t_{after\,cycle\,slip}) = \sigma_{i,biased}^2(t_{i,cycle\,slip} + \Delta t_{\min}) + \sigma_{i,MBias}^2(t_{i,cycle\,slip} - 1)$$

and as long as the time passes the bias is estimated following the same approach as before, to react against new cycle slips;

- if the user velocity becomes again greater than the minimum value ($V_{user,min}$) for at least the minimum time ($T_{min}$), the filter output substitutes the previous one computing the iono-free smoothed pseudorange as:

$$\tilde{P}_{i,iono-free}(t_k) = \tilde{N}_i(t_k) + \Phi_{i,iono-free}(t_k)$$

wherein
$\tilde{N}_i(t_k)$ is the estimated ambiguity,

$\Phi_{i,iono-free}(t_k)$ is the iono-free carrier phase measurement for the current epoch;

and with associated covariance of the residual error of the smoothed pseudorange $\sigma_{i,smoothed}^2(t_k)$ computed as defined above.

According to another preferred embodiment of the method of the invention, in order to compute the weights of the pseudorange errors, the variance of the noise of each pseudorange i is computed according to the equations in the Minimum Operations Performance Standards (MOPS) updating the multipath term with the characterization from the pseudorange smoothing and error variance estimation

$$\sigma_{i,multipath}^2 = \sigma_{i,smoothed}^2(t_k) :$$

$$\sigma_i^2 = \sigma_{i,flt}^2 + \sigma_{i,UIRE}^2 + \sigma_{i,air}^2 + \sigma_{i,tropo}^2$$

$$\sigma_{i,air}^2 = \sigma_{i,noise}^2 + \sigma_{i,multipath}^2 + \sigma_{i,divg}^2$$

and the weight matrix W is built as:

$$W^{-1} = \begin{bmatrix} \sigma_1^2 & 0 & \cdots & 0 \\ 0 & \sigma_2^2 & \cdots & 0 \\ \vdots & \vdots & \ddots & \vdots \\ 0 & 0 & \cdots & \sigma_N^2 \end{bmatrix}.$$

The method of the invention preferably uses an algorithm for computation of the Protection Level based on weighted RAIM for multiple failure case, said algorithm uses the following equation:

$$PL = \max\{SLOPE\} \times \gamma_{norm}(P_{FA}) + k_n(P_{MD}) \sqrt{\sum_{i=j_1}^{i=j_1} \left[ (H^T PH)^{-1} \right]_{ii}}.$$

where:

PL is the Protection level for the state vector coordinates of interest to protect,

Max{SLOPE} is the worst relation between the error in the state vector coordinates of interest and the Chi-squared $\chi^2$ test statistic $\rho$,

$\gamma_{norm}(P_{FA})$ is the threshold of the RAIM Failure detection test, for a given False Alarm probability PFA,

$k_n(P_{MD})$ is the number of standard deviations in a n-dimensions (those of the state vector coordinates of interest to protect) gaussian distribution that left out a probability corresponding to the specified probability of missdetection PMD,

H is the observation matrix,

P is the correlation and weight matrix between the measurements;

wherein Max{SLOPE} is obtained maximizing the error in the set of elements of the state vector due to the multiple measurement failure that yields to an increment in the Chi-squared test statistic on measurements residuals to detect failures; introducing in the computation of this maximization additional constraints (managed with Lagrange mathematical techniques) over the classical formulation:

- one constraint consisting in that the multiple failure yields to a constant value of the chi squared test,

-
    and a second constraint consisting in defining the failure mode so that from all the possible combinations of satellites only the combinations of any given number M of satellites is allowed;
    therefore the value obtained for Max{SLOPE} is:

$$\max\{SLOPE\} = \sqrt{\lambda_{1_{MAX}}} = \sqrt{(N-m)\lambda_{MAX}}$$

where $\lambda_{MAX}$ is the maximum eigen-value, corresponding to a vector $\vec{e}_{MAX}$, which are one of the solutions to the generalized eigen-value problem:

$$\left( V^T A_{SUB(j_1,\cdots j_2)}^T A_{SUB(j_1,\cdots j_2)} V - \lambda V^T S V \right) \vec{e} = \vec{0}$$

where:

Vrepresents a sub-space of failure modes under test (The concept of the "failure mode" considers a subset of measurements error vectors $\vec{b}$ belonging to a sub-space of failure modes under test so that any error vector $\vec{b}$ can be built from a family of failure modes V generated from the unitary vectors $\bar{e}_i$ in the measurement space by:

$$\bar{b} = V\bar{e} = \{\bar{v}_1, \cdots \bar{v}_M\}\bar{e}_M$$

and so, with M measurements, the single failures are represented by M cases of one dimension subspaces, and for multiple failures of $n_F$ measurements there will have to be considered all the combinations of M measurements in groups of $n_F$ represented by

$$V_{SUB(j_1, \cdots j_{n_F})} = \begin{bmatrix} \bar{0} & \bar{0} \\ 1_{j_1} & \vdots \cdots \\ \vdots & \cdots & \vdots \\ \vdots & 1_{j_{n_F}} \\ \bar{0} & \bar{0} \end{bmatrix}_{M, n_F}$$

$A_{SUB(J1, \cdots j2)}$ is the submatrix of the pseudo-inverse matrix $H^* = (H^T PH)^{-1} H^T P$, of the

state vector least squares solution $\hat{x} = H^\bullet \tilde{Z}$, with the rows $j$ corresponding to the state vector coordinates of interest:

$$A_{SUB(j_1, \cdots j_2)} = \begin{bmatrix} \bar{0} \\ H^\bullet_{j_1} \\ \vdots \\ H^\bullet_{j_2} \\ \bar{0} \end{bmatrix}$$

with P the correlation and weight matrix between the measurements and $S=I-HH^*$.

A second aspect of the present invention relates to a system to provide a GNSS navigation position solution of at least one mobile unit with guaranteed integrity in non-controlled environments. Said guaranteed integrity based on protection levels, wherein said at least one mobile unit comprises:

- a GPS/SBAS receiver to receive a Global Navigation Satellite System (GNSS) signal,
- means for processing said GNSS signal to obtain carrier phase and pseudoranges measurements,
- means for carrying out a pre-processing of said measurements in order to detect and characterize local errors in said measurements, said characterization including providing error bounds, and providing a set of measurements rejections when said characterization is not possible,
- means for using said error bounds in a weighted Receiver Autonomous Integrity Monitoring (RAIM) algorithm in order to compute position coordinates and associated protection levels.

According to a preferred embodiment of the system, the mobile unit further comprises a wireless data telecommunications transceiver, arranged to send said computed position coordinates and associated protection levels to a central platform, which is arranged to provide at least one authorized user with said position coordinates of said mobile unit together with an associated integrity guarantee information.

Said integrity guarantee information means that the probability of the error of said position being over or below a pre-established or predetermined protection level is limited to an integrity risk value . According to this preferred embodiment, an integrity flag is issued with said position coordinates; the integrity flag is negative if the protection level cannot be computed with the pre-established integrity risk, thereby indicating that the error cannot be bounded with the pre-established integrity risk.

Then, the user of the system has a guarantee that if a position record is positively flagged, its error is within specified limits.

Preferably said at least one mobile unit has interfaces with other external devices.

Said at least mobile unit preferably has an interface with an odometer located in the mobile unit, in order to use measurements from the odometer to obtain position estimates during GPS and/or Galileo outages; and/or to use said measurements from the odometer to reduce position estimation error, thereby reducing correspondent Protection Levels maintaining the pre-established (required) integrity risk.

Said GPS/SBAS receiver of the mobile unit can be a Galileo or GPS and Galileo combined receiver, augmented or not with SBAS.

The system preferably further provides the velocity coordinates of the mobile unit, considering for integrity computation the velocity of the mobile user, not computing or considering solutions where the mobile unit has been stopped during a certain period of time.

According to a preferred embodiment, information from different mobile units located in a certain restricted area are combined to cross-check the quality of the provided measurements.

Preferably, said position coordinates of said mobile unit together with said associated integrity guarantee information are encoded in a data packet, stored in a non-volatile memory of said mobile unit, and transmitted to the central platform at certain predefined intervals, or upon request of the central platform, or when a specific geographical condition happens.

The present invention then consists on the extension of GNSS receivers and associated navigation integrity, fully developed for the aeronautical field, to the terrestrial field with the urban and road environments as reference scenarios. This extension requires a set of modifications and innovations, in particular in what concerns data processing in the navigation and integrity algorithms to deal with multiple potential sources of error in the measurements affecting several satellites measurement simultaneously, instead of the clean aeronautical environment where the dominant error source are the satellite ephemeris and clock errors and the ionospheric errors, and those error sources are properly bounded as part of the integrity services (e.g. UDRE and GIVE in the SBAS standard).

The SBAS systems, currently implemented by EGNOS in Europe and by WAAS in United States, are an overlay to GPS (and GLONASS in the EGNOS case) that determine the integrity of the GPS satellites at signal in space (SIS) level, providing at the same time corrections to the pseudoranges for an improved navigation accuracy. Therefore SBAS systems provide the mentioned bounds and inform the user receiver which are the healthy satellites that can be used for positioning and the present invention will be using measurements of satellites with due SBAS integrity.

The remaining sources of errors in the measurements will be the local effects, usually dominated by the multipath. The SBAS navigation solution and integrity algorithms use a pseudorange measurement noise model defined in the Appendix J of "Minimum operational performance standards for GPS/WAAS Airborne Equipment" RTCA/DO-229C (28/11/2001) for each *i*-satellite as:

$$\sigma_i^2 = \sigma_{i,flt}^2 + \sigma_{i,UIRE}^2 + \sigma_{i,air}^2 + \sigma_{i,tropo}^2$$

where the different terms are:

$\sigma_{i,flt}^2$ model variance for the fast and slow long term corrections residual error.

$\sigma_{i,UIRE}^2$ model variance for the slant range ionospheric correction residual error.

$\sigma_{i,air}^2$ model variance of the airborne receiver errors, which is composed of the terms:

$$\sigma_{i,air}^2 = \sigma_{i,noise}^2 + \sigma_{i,multipath}^2 + \sigma_{i,divg}^2$$

- $\sigma_{i,noise}^2$ : Variance of a normal distribution that bounds the errors in the tails of the distribution associated with the GNSS receiver for satellite i, including receiver noise, thermal noise, interference, inter-channel biases, extrapolation, time since smoothing filter initialisation, and processing errors.

- • $\sigma_{i,multipath}^2$ : Variance of the zero mean normal distribution of the airborne equipment multipath error, function of the satellite line of sight elevation angle.

- $\sigma_{i,divg}$ : Variance of the differentially-corrected pseudorange error induced by the steady-state effects of the airborne smoothing filter, given the ionospheric divergence, due to the evolution of the slant delay evolution with the time.

$\sigma_{i,tropo}^2$ model variance of the residual error for equipments that apply the tropospheric delay model described in the MOPS.

In urban environments this model with the information broadcast by SBAS systems and by the GPS messages, is yet valid for the SIS level terms (fast and slow long terms, ionospheric and tropospheric delay terms) and the receiver hardware noise term $\sigma_{i,noise}^2$, but the local effects, dominated by the non-controlled multipath, will follow a totally different statistic than the clean background multipath environment considered in the MOPS specification.

The following two approaches to manage this effect, as indicated above, are used simultaneously in the present invention:

- Pseudorange measurements with very large range errors will be rejected, and a set of measurements rejections is provided.

- 
  The variance of the pseudorange measurements noise, dominated by the multipath $\sigma_{i,multipath}^2$, will be characterised each epoch, using said pseudorange measurements. In case this characterization is not reliable, the associated measurement will be also rejected.

The present invention takes advantage of the behaviour of the different types of multipath (composed direct plus reflected signal and single reflected signal) in presence of the receiver dynamics to develop efficient methods to reject degraded measurements and to characterise the measurements noise with $\sigma_{i,multipath}^2$ for navigation. Due to receiver dynamics, the composed signal with multipath is seen in a first approach as noise (measurements in locations more distant than one wave-length are de-correlated), and in the case of the single reflected signal, the Doppler effect due to the projection of the receiver velocity in the signal path is different than in the line of sight of the expected nominal signal.

According to the invention, the weighted RAIM algorithm includes new and modified characteristics over the classical approach:

- The pseudorange step detector, as a basic method to screen out failing measurements in the traditional approach, is replaced by a more exhaustive pre-processing for measurement characterisation, with the twofold objective of rejecting pseudoranges with large errors and characterising the properties of the pseudorange measurements susceptible of being used for navigation. And, according to a preferred embodiment of the invention:
- Mitigation and rejection methods of the single reflected signal is achieved based on the following steps:

  o Carrier Phase pre-processing. The classical RAIM algorithms for positioning are based on pseudorange measurements. In this preferred embodiment the method of the invention includes the use of the carrier phase measurements, the computation of receiver velocity and said receiver velocity as a resource to screen out, with a configurable confidence level, the erroneous measurements.
  o Carrier Phase RAIM. As part of the pre-processing stage the RAIM algorithm is adapted to be applied on the Least Squares on the Carrier Phase measurements to compute the vector of position change between measurement epochs, or velocity vector. Due to the small noise of the nominal Carrier Phase measurements, in the order of several millimetres or the centimetre level, this test provides a high observability on carrier phase inconsistencies. This is more evident in the case of the single reflected signal that follows a totally different path from the nominal, which makes it being affected by the Doppler effect in a totally different amount.

- Multipath characterisation. Mitigation and rejection methods of the signal composed of direct and reflected components:

  o Pseudoranges smoothing and Error variance estimation. The stage of pseudoranges smoothing with carrier phase is enhanced to serve for multiple purposes: smoothing of pseudoranges, characterisation of the noise of the raw and smoothed pseudoranges, plausibility test on raw pseudoranges and rough multipath detector.

This method is especially effective with receiver motion over the signal with multipath, composed of direct and reflected signal.

- Pseudoranges weight update. The noise measured in the smoothed pseudoranges will feed the adaptive pseudorange noise model identified above in MOPS to compute the pseudoranges weight matrix to be used in the navigation and the RAIM based Protections level computation.
- Navigation and integrity with RAIM:

  o The "*a priori*" model fixed pseudorange measurement weight matrix used in the navigation and RAIM algorithms, specified in "Minimum operational performance standards for GPS/WAAS Airborne Equipment" RTCA/DO-229C (28/11/2001), is replaced by the adaptive Pseudoranges weight matrix updated each epoch.
  o The Protection Levels, based in the weighted RAIM single failure detection described in "Weighted RAIM for precision approach" T. Walter, P. Enge, ION GPS (1995), are enhanced to be computed in any multiple failure condition. The computation of these Protection Levels in any generic multiple failure case is a generalisation of the development for the double failure case described in "Solution of the two failure GPS RAIM problem under worst case bias conditions: parity space approach " R. Grover Brown, NAVIGATION, Vol. 44, No. 4 (Winter 1997-98).

The result of all these innovative enhancements to the current RAIM schemes will allow, on one hand to screen out the measurements with large errors from the computation of the positioning, and on the other hand to properly characterize the pseudoranges to be used for positioning, and finally, with this consistent information of the pseudorange characteristics, the adaptive RAIM algorithm in position will determine the protection level of the computed position with the required integrity or confidence level.

The GNSS signal may be provided by Galileo instead of by SBAS systems; or by Ground Based Augmentation System (GBAS) or other local integrity elements; or by other GNSS systems as, potentially, GPS-III.

Since the application of the method of the present invention is not for safety-of-life applications, but for the so-called *liability critical* applications, hard real time performance is not essential, and integrity assessment can be computed with certain time delay, which allows temporal analysis of data.

Brief description of the drawings

While the invention will be described in conjunction with the preferred embodiments, it will be understood hat they are not intended to limit the invention to these embodiments.

Figure 1 illustrates the overall algorithms architecture of one embodiment of the method of the present invention, identifying the main components, and in particular highlighting the claimed innovations in the present invention.

Figure 2 shows the main components and interfaces of a particular embodiment of the mobile unit of the system of the present invention.

Figure 3 shows an embodiment central platform as part of the system of the present invention.

Detailed description of the preferred embodiments

Reference will now be made in detail to a preferred embodiment of the method of the present invention, for guaranteeing the integrity of the navigation solution in non-controlled environments, based on the service integrity included in a GNSS Signal in Space (from SBAS system today and GBAS, Galileo and GPS-III in the future).

The system of the present invention provides different authorized users 30, via a central platform 20, with information about position coordinates of the remote mobile units 10.

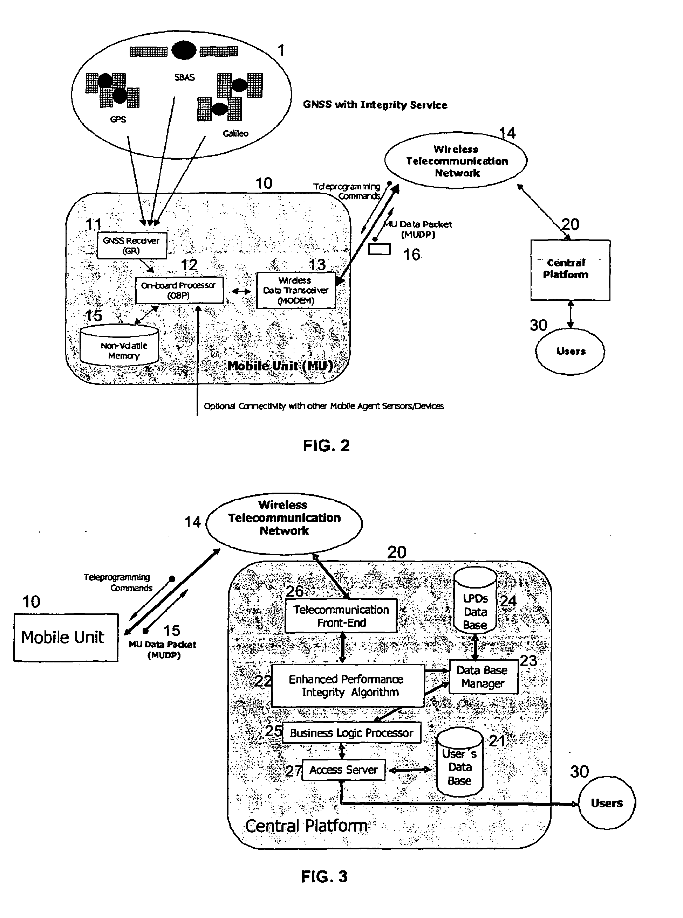

As shown in figure 2, each mobile unit 10 of the system of the present invention comprises a GNSS receiver 11 with its corresponding polarised antenna (blocking single reflected signals) -GPS/SBAS receiver or a Galileo receiver or GPS/SBAS/Galileo receiver. It also includes an Integrity Processor 12; the Integrity Processor or part of it can be integrated within the GNSS receiver 11. It also includes a non-volatile memory 16. Additionally the mobile unit is not required to but, may have interfaces with other external devices, such as sensors carried by the Mobile Agent (PDA, Console with display and keyboard, etc).

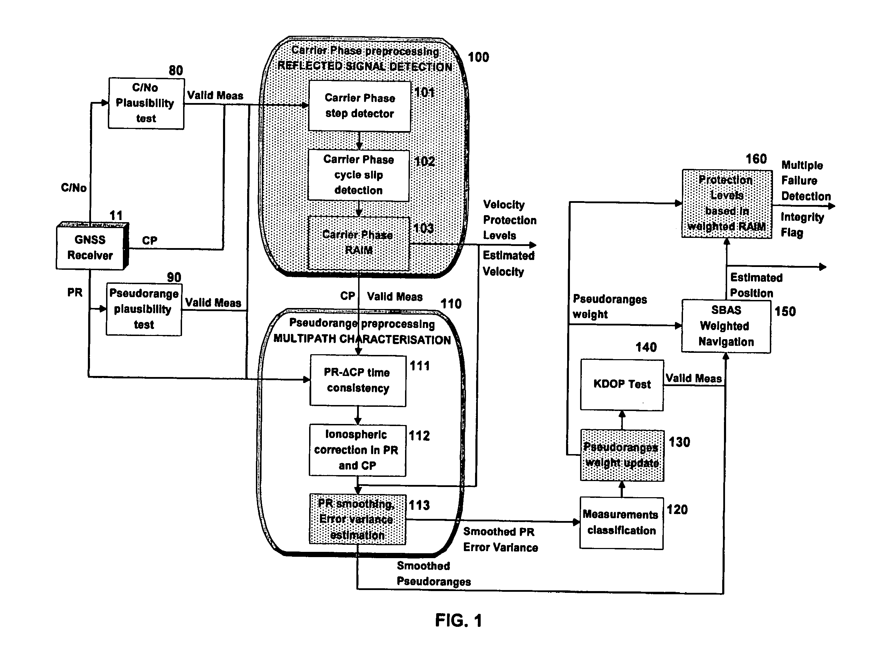

The mobile unit 10 receives the navigation signal 1 (GPS, Galileo or both) through the GNSS receiver and the SBAS messages. SBAS information messages can be received in either way, directly from the SBAS geostationary satellite through the GNSS receiver (SBAS enabled) or indirectly through a ground based wireless telecommunication network 14 via a wireless data telecommunications transceiver or modem 13. As it will be explained in detail below, the Integrity Processor of the mobile unit (or the GNSS receiver depending on the implementation) estimates its position coordinates and associated Protection Level. If the Protection Level cannot be computed with a pre-establish (required) Integrity Risk, then an Integrity Unhealthy flag is issued to accompany obtained position to indicate that the error cannot be bounded with the pre-established Integrity Risk. The mobile unit uses SBAS Integrity information about GPS satellites and ionosphere and the method of the present invention (as outlined in figure 1), in order to compute position and Protection Levels. The output from the mobile unit are: a Position co-ordinates estimate, an Integrity healthy/unhealthy flag and associated Protection Level.

Thus, each provided position co-ordinates, velocity and time, are accompanied by Integrity information, which consists of said Integrity (Healthy/Unhealthy) Flag and associated Protection Levels. Said integrity flag, when positive, indicates that said position coordinates have an error that is within provided Protection Levels with a probability greater than one minus the Integrity Risk. The system object of present invention then guarantees that the probability of the Integrity Flag not indicating that the provided position coordinates have an error larger than a specified Protection Level, is lower than a specified Integrity Risk value.

The outputs from the mobile unit (position estimate, integrity healthy/unhealthy flag and associated Protection Levels) are encoded in a data packet 16, that the mobile unit transmits through the modem 13 to the central platform. This data packet 16 is called hereinafter MU data packet or MUDP 16.

The MUDP content is obtained by the integrity processor 12 of the mobile unit at a fix frequency rate (1 Hz for instance).

In a typical embodiment of the system the MUDP is formed by:

- Current date and time of the day: date and time of the day at the instant of MUDP transmission.
- Last available GNSS position and velocity (available whatever the integrity was).
- Integrity flag and Protection Levels of previous GNSS position and velocity.
- Date and time of the day correspondent at the instant of computation of previous GNSS position.
- Last available GNSS position and velocity with an Integrity Positive flag and correspondent protection levels.
- Raw Data used by the GNSS receiver to compute previous position and velocity (pseudo-range and carrier phase measurements, satellite Ids, GNSS navigation messages).
- Date and time of the day correspondent at the instant of computation of previous GNSS position.
- External devices data (optionally).

Optionally the Integrity Processor of the mobile unit can implement additional algorithms that enhance position estimation performances in terms of actual error and Protection Level reduction using additional information, in particular Geographic information and mobile agent dynamic constraints.

In order to allow the system to support different users 30, each mobile unit boarded on a mobile agent whose position is to be given to a user 30, provides MUDPs 16 to the central platform 20 in two different ways: Real Time MUDPs or Logged MUDPs.

In the case of Real Time MUDPs, the MU transmits the latest available MUDP when a transmission event occurs. Transmission events are configured by the central platform via a teleprogramming command. Several Transmission events can be configured:

o Central platform Polling: Latest available MUDP is transmitted when the MU receives from the central platform a polling command.
o Preconfigured Time Intervals: MUDPs are transmitted to the central platform at fix time intervals teleprogrammed by the central platform.
o Preconfigured Travelled Distance Intervals: MUDPs are transmitted to the central platform at fix distance intervals teleprogrammed by the central platform. Distance is computed by the Integrity Processor 12 integrating mobile agent trajectory as derived by GNSS positions.
o Position/velocity based events: The Integrity Processor can be configured to check if any of the following transmission events occurs:

- Position positively integrity flagged accomplishes a configured condition (to be inside or outside a closed area, to be nearer than a configured distance to a configured position, to farther than a configured distance to a configured position,...)
- The same regardless of the value the integrity flag.
- Velocity positively integrity flagged accomplishes a configured condition (higher than a configured value, higher than a position dependant configured value)
- The same regardless of the value of the integrity flag.

o Events based on observations coming from externally connected sensors: if the Integrity Processor is interfaced with the external mobile agent sensors, the Integrity Processor can be configured to check if transmission events dependant on a configured conditions occurs.

o MU detectable events directly triggered by external devices: If the Integrity Processor were interfaced with external mobile agents sensors or devices capable of directly generating a discrete signal, the Integrity Processor can be configured to check the status of such a signal as transmission events.

In the case of Logged MUDPs: the non-volatile memory 15 of the mobile unit 10 is used by the integrity processor 12 to continuously register generated MUDPs, upon direct command of the central platform 20, or in accordance with configured transmission events for downloading logged MUDPs, the mobile unit transmits all logged MUDPs to the central platform.

In either case MUDPs transmission events are teleprogrammed by the central platform in accordance with user configured parameters for Location Packet Data (LPD) availability. Since more than one User can have access to position data of a single mobile unit and each access can have different accessibility requirements, transmission events for a particular mobile unit results from making a logical OR condition of transmission events resulting from each user accessibility requirements.

Figure 3 shows a preferred embodiment of the Central Platform 20, which provides multiple authorized users with the defined localization information -LPDs-based on the reception and processing of MUDPs. Received MUDPs are processed to obtain the correspondent LPDs in accordance with configured user parameters; which are stored in a secure user's database 21 implementing all legal requirements related to data privacy.

The central platform also implements additional algorithms that enhances position estimation performances in terms of actual error and Protection Level reduction using additional information, in particular Geographic information and mobile agent dynamic constraints (Enhanced Performance Integrity Algorithm 22). The central platform will provide each user 30 with access to LPDs of a mobile agent for which said User has been authorized to access by said mobile agent. The validity of the access can be limited by the expiry date of the authorization. Additionally the access can be restricted to certain time, position or velocity conditions.

The central platform coordinates the reception, storage and delivery to users of the mobile agents localization information. In addition it applies a privacy policy sufficiently secure to protect the data of all mobile agents. Different embodiments of the central platform are possible.

The Telecommunication front-end 26 shown in figure 2, centralizes incoming and outgoing data transfers between the central platform and the mobile units. Several entities of information are interchanged between the central platform and the mobile unit: Tele-programming parameters, user position data packages i.e. MUDPs, Delete command and Download command.

Tele-programming parameters, from the CP to the MU configure MUDP transmission events for each MU interfacing with the CP as described previously.

Transmission events of MUDPs is carried out according to a teleprogrammed configuration, as described previously.

A Delete command, from the central platform to the mobile unit instructs the mobile unit to remove all MUDPs logged at the non-volatile memory 15.

The Download command sent from the central platform to the mobile unit is used to prompt the mobile unit to download recorded data to the central platform.

The Enhanced Performance Integrity Algorithm function implements specific integrity functions that, based on additional sources of information (e.g. maps with guaranteed accuracy), improves the computation made by the mobile unit either by reducing position errors or Protection Levels while maintaining the Integrity Risk and/or by cross checking the integrity information as provided by the mobile unit.

The Data Bases (DB) and corresponding DB Manager 23 store and retrieve two sets of data:

■ Mobile unit identification as well as LPDs of the different mobile units., which are stored in a LPD Data Base 24.
■ The Users DB 21 contains the user configured parameters for LPDs availability:

- Type of data either raw (e.g. position and velocity) or processed information such as distance traveled.
- Data accessibility restrictions: conditions applicable to restrict access of User to mobile unit LPDs (e.g., only when mobile unit is inside certain area).
- Periodicity of the information to be provided or events when information has to be provided.

The central platform has a Business Logic Processor 25 which allows: 1) to create mobile unit configuration parameters to attend the needs of the different users; 2) to create from the LPDs Data Base the information required by each user according to their needs as above defined either on a periodical basis or on an event basis. Finally, the Access Server 27 allows the user to access securely to authorized information according to the pre-established conditions.

Regarding the users of the present system, users may be public or private companies or organizations, that wish to have access to the LPDs of one or several mobile agents. Each user then should be authorized either by the mobile agent or by a legal authority to have access to his LPDs. These Users take advantage of LPDs provided by the central platform to support their operation (for instance, toll collection or road pricing operators) or to generate localization Based Services for end users (for instance, automatic vehicle location/fleet management services). Other potential users are: insurance companies, traffic authorities, surveillance bodies, law enforcement bodies, regulators, etc. thanks to the ability of the system to support provision to multiple Users of Mobile Agent localization information (LPDs) based upon a single mobile unit. On the other hand, the mobile agent carrying a single mobile unit gains access to a wide variety of services provided by the users of the system: free flow automatic tolling, automatic payment of taxes in congestion control systems, security services, etc. Also, users have the advantage of sharing the same single infrastructure provided by the single central platform.

In the following the method used by the Integrity Processor of each mobile unit to compute Integrity Flag and Protection Levels associated to each position output is described.

The object of the method of the invention is the computation of the navigation solution (position, velocity and/or time) error bounds (also known as Protection levels in the civil aviation world) that guarantee the required level of integrity, i.e. that ensures that the probability of the error being larger than the mentioned error bound is below certain probability, and also the computation of a validity flag of the navigation and integrity outputs.

The method ensures the validity of the mentioned Protection Levels even in the case of the user being in a non-controlled environment. Integrity takes priority with respect to solution availability, implying that conservative mechanisms are implemented to identify and reject measurements or position and integrity outputs suspicious of having large errors.

The method of the invention includes specific algorithms that detect situations with measurements that can be subject to excessive multipath errors in such a way that if they can be identified then they are not considered in the computation of the navigation solution, or if they cannot be identified the navigation and integrity solution is invalidated.

The method of the invention generalises the computation of the error bounds as defined today in the corresponding RTCA MOPS (based on the assumption of a controlled environment, in particular with reduced multipath) to a non-controlled environment by screening out suspicious wrong measurements, using only not rejected measurements and including additional margins for the computation of protection levels to account for residual multipath errors.

The invented method consists on a pre-processing, preceding the position and integrity computation, that will be responsible for the characterisation of pseudoranges and of a first set of measurements rejections. Later, for navigation and integrity computation, a RAIM scheme will be used, which will allow a final rejection of not properly characterised pseudoranges. For this purpose a weighted RAIM algorithm will be used.

The corresponding algorithms consist of the following steps that are individually described in the following paragraphs (related to their numeric references as shown in figure 1). Detailed description is later provided for those new algorithms that are specific part of this invention.

1) Pre-processing:

- General Pre-processing:

    o Carrier to noise plausibility test (80)
    o Pseudorange plausibility test (90)

- Carrier Phase pre-processing 100 (reflected signal detection):

    o Carrier phase step detector 101
    o Carrier phase cycle slip detector 102
    o Inventive Carrier phase RAIM 103

- Pseudorange pre-processing 110 (multipath characterisation):

    o Pseudorange (PR) versus carrier phase (CPh) time consistency test 111
    o Ionospheric correction for pseudorange and carrier phase 112
    o Inventive Pseudorange smoothing and error variance estimation 113

- Measurement classification 120

2) Navigation and integrity computation:

- Inventive Pseudoranges weight update 130
- KDOP test 140
- SBAS weighted navigation 150
- Inventive Protection level computation based on weighted RAIM for multiple failure case 160.

### *Pre-processing:*

• General pre-processing:

- Carrier to noise plausibility test. Nominally the C/NO of the received signal depends on the satellite elevation and secondarily of the satellite broadcast power and of the receiver antenna gain pattern. A threshold of minimum allowed C/No as a function of the satellite elevation will allow to reject those satellites with signal power attenuated by trees canopy or by multipath with the carrier of the reflected signal in opposite phase. The threshold as function of the elevation can be calibrated continuously with the measured C/No for the satellites in view with the maximum elevation.

- Pseudorange plausibility test. Pseudorange plausibility check, on the values of the full pseudoranges. The approach for this algorithm relies on the computation of predicted ranging measurements which are more or less accurate, based on the information coming from previous epochs and the navigation messages broadcast by the satellites applied to the time when the plausibility has to be checked.

• Carrier Phase pre-processing:

- Carrier phase step detector. With the latest estimation/estimate of receiver position and velocity, receiver and satellites clock bias and drift, and the latest and the current satellite position and velocity, ranges of plausible carrier phases measurements of all the satellites can be estimated. This allows rejecting all the measurements of those satellites with highly deviated Carrier Phases.
- Carrier phase cycle slip detector. The purpose of this algorithm is to detect discontinuities In the carrier phase measurements due to cycle slips. No attempt will be made to repair the cycle slips and thus only a detection flag for each active satellite will be provided. The proposed algorithm is based on the generation of a predicted carrier phase measurement for the current epoch based on the latest ones, and the comparison with the incoming carrier phase. If the difference between both is greater than a certain threshold, then it is considered that there has been a cycle slip, and the filter is therefore reset. Additionally the receiver clock stability is not assumed to be good, and consequently a mechanism has to be implemented in order to avoid considering a clock jump as a cycle slip. This is based on the fact that the clock jump appears in all the measurements as a cycle slip of the same magnitude, assuming that the short-term stability of the code and phase inter-channel bias is sufficiently good.
- Carrier phase RAIM. As indicated below, there is specific innovation in this carrier phase RAIM, which is part of the method of the present invention. RAIM in the accumulated carrier phase between measurement epochs. The objective is twofold: to check the consistency between the carrier phase measurements in one epoch and to estimate the increment of position between measurement epochs, or velocity, of the receiver. The formulation of the RAIM algorithms for positioning with pseudoranges, like the weighted RAIM algorithm described in "Weighted RAIM for precision approach" T. Walter, P. Enge, ION GPS (1995), is applicable for redefining the state vector, the input data, and the RAIM parameters.

The state vector, receiver position vector and clock bias, are replaced by the receiver increment of position and clock drift between measurement epochs.

As input data, the following modifications have to be made:

- As measurements, the pseudoranges are replaced by the accumulated carrier phase between the previous and the current epoch.
- The measurement noise, used to build the weight matrixes, is now defined by the noise of the *"a priori"* nominal accumulated carrier phase measurement, which depending on the receiver can vary from a few millimetres to about two centimetres.
- The observation matrix, named G in "Weighted RAIM for precision approach" T. Walter, P. Enge, ION GPS (1995), will be, as usual, the partial derivate of the measurement equation with respect to the state vector. This has to be recalculated, as the measurements and state vector are now different than in the classical positioning RAIM with pseudoranges.

The main RAIM parameter, the threshold for the valid quadratic sum of measurements residuals, has to be scaled to the values and units of the measurement noise considered now, but keeping the False Alert and misdetection probabilities.

In order to formulate the Carrier Phase weighted RAIM terms, the model of the Pseudorange measurement from satellite $j$, in a given epoch $t$, will be formulated as follows:

$$\widetilde{P}^j = \widetilde{\rho}^j + c\widetilde{B} - cdt^j + rel^j + I^j + T^j + TGD + M^j_{Pf} + \varepsilon^j_{Pf}$$

where:

$\rho^j$      is the range from the receiver to the satellite j, from the true receiver position

$\widetilde{cB}$      Is the true receiver clock bias

$cdt^j$      Is the satellite clock offset, computed with the broadcast ephemeris and available corrections

$rel^j$      Is the relativistic error, for which there is a correction model in the GPS standards

$I^j$      Ionospheric effect, which is a delay in the pseudorange

$T^j$      Tropospherical delay, for which there are models (GPS, SBAS MOPS, STANAG...), or can be computed from Pressure, Temperature and humidity measurements (e.g. collected in meteorological RINEX).

$TGD$      Total group delay (between carrier frequencies).

$M^j_{Pf}$    Multipath effect in the pseudorange measurement, at frequency f, to the j satellite

$\varepsilon^j_{Pf}$    Receiver nose for the pseudorange measurement, at frequency f, to the j satellite.

The measured accumulated carrier phase from satellite j, between epochs $(t-\Delta t)$ and $t$ will be:

$$\Delta\widetilde{\Phi}^j = \begin{cases} \widetilde{\rho}^j(t) - \widetilde{\rho}^j(t-\Delta t) + c(\widetilde{B}(t) - \widetilde{B}(t-\Delta t)) \\ -c(dt^j(t) - dt^j(t-\Delta t)) + (rel^j(t) - rel^j(t-\Delta t)) + (T^j(t) - T^j(t-\Delta t)) + \Delta TGD \\ -(I^j(t) - I^j(t-\Delta t)) \\ +(M^j_{\Phi f}(t) - M^j_{\Phi f}(t-\Delta t)) \\ +CS(\Delta t) + \varepsilon^j_{\Phi f}(t) \end{cases}$$

where:

- There are the ranges to the satellite and the receiver clock bias at the current and previous epochs.
- With close epochs, the terms representing the evolution of the satellite clock offset, relativistic effect, tropospheric effect and overall group delay are negligible, except the troposheric contribution at very low elevations, depending on the intended application:

$$-c(dt^j(t) - dt^j(t-\Delta t)) + (rel^j(t) - rel^j(t-\Delta t)) + (T^j(t) - T^j(t-\Delta t)) + \Delta TGD \rightarrow 0$$

- The effect of the ionosphere in the carrier phase is an advance instead of a delay like in the pseudorange. Nevertheless, except in some applications at very low elevations, the evolution effect is negligible:

$$-(I^j(t) - I^j(t-\Delta t)) \rightarrow 0$$

- Although the multipath in carrier phase is smaller than in pseudorange, the difference between the multipath effects in current and previous epoch cannot be assumed small, as both multipath effects can be very different (uncorrelated, geometry changes, etc).
- There is a new term, CS(Δt), which represents the cycle slip effect. For some epochs it will be null, while for others it will represent several wavelengths.
- The phase noise is much smaller than the pseudorange noise, but not negligible.

In order to linearize the problem, the state around which the linearisation will be performed will be composed of:

$\bar{X}(t - \Delta t)$ Known estimated receiver position at the previous epoch.

$B(t - \Delta t)$ Known estimated receiver clock bias at previous epoch.

$\boldsymbol{B}(t - \Delta t)$ Estimation of the receiver position at the current epoch, previous to the final solution by Least Squares (LS).

For the iterations in the LS solution computation, this vector can be initialised with $\vec{X}_i^-(t)$ and in successive "i" iterations it can be updated.

$B_i^-(t)$ Estimation of the receiver clock bias at the current epoch, previous to the final LS solution. For the iterations in the LS solution computation, this clock bias can be initialised with $B(t - \Delta t)$ and in successive "i" iterations it can be updated.

And the state vector will be:

$\Delta \bar{X}(t)$ Estimated increment of receiver position at current epoch, from $\vec{X}_i^-(t)$

$\Delta B(t)$ Estimated clock drift at current epoch, from $B_i^-(t - \Delta t)$

Therefore:

$$\bar{X}(t) = \vec{X}_i^-(t) + \Delta \vec{X}(t)$$

$$B(t) = B_i^-(t) + \Delta B(t)$$

where, initially, for the iterations in the LS solution computation:

$$\vec{X}_{i=0}^-(t) = \bar{X}(t - \Delta t)$$

$$B_{i=0}^-(t) = B(t - \Delta t)$$

So, the ranges from the receivers to the satellites are:

- Previous epoch:

$$\rho^j(t - \Delta t) = \sqrt{\left(\bar{X}^j(t - \Delta t)^T - \bar{X}(t - \Delta t)\right) \bullet \left(\bar{X}^j(t - \Delta t)^T - \bar{X}(t - \Delta t)\right)}$$

- Current epoch:

$$\rho_i^{j-}(t) = \sqrt{\left(\vec{X}^j(t)^T - (\vec{X}_i^-(t) + \Delta \vec{X}(t))\right) \bullet \left(\vec{X}^j(t - \Delta t)^T - (\vec{X}_i^-(t) + \Delta \vec{X}(t))\right)}$$

where the state vector only appears in $\rho^j(t)$.

With all these definitions, we have all the elements to formulate the linearized measurement equation around the linearisation point:

$$\vec{Z} = H \left\{ \begin{matrix} \Delta \vec{X}_i^- \\ \Delta B_i^- \end{matrix} \right\} + R \vec{\omega}$$

The measurement term will be:

$$\vec{Z} = \left\{ \begin{matrix} \vdots \\ \Delta \tilde{\Phi}^J - \Delta \hat{\Phi}^J \\ \vdots \end{matrix} \right\}$$

where the estimated accumulated carrier phase measurement will be:

$$\Delta \hat{\Phi}^J = \left\{ \begin{matrix} \hat{\rho}^{J}_i(t)\big|_{\Delta \vec{X}(t)=\vec{0}} - \hat{\rho}^J(t - \Delta t) + c(\tilde{B}_i^-(t) - \tilde{B}(t - \Delta t)) \\ - c(dt^J(t) - dt^J(t - \Delta t)) \\ + (T^J(t) - T^J(t - \Delta t)) - (I^J(t) - I^J(t - \Delta t)) \\ + CS(\Delta t) \end{matrix} \right.$$

Each row hj of the observation or information matrix H will be:

$$h_J = \left[ \left. \frac{\partial(\Delta \Phi^J)}{\partial \vec{X}} \right|_{\vec{X}_i(t)}, \quad \left. \frac{\partial(\Delta \Phi^J)}{\partial(\Delta B)} \right|_{B_i(t)} \right] = \left[ -\frac{\vec{X}^J(t)^T - \vec{X}_i^-(t)}{\left| \vec{X}^J(t)^T - \vec{X}_i^-(t) \right|}, \quad 1 \right]$$

The measurements noise will be dominated by the phase noise and the difference of multipath between epochs, except when there is cycle slip that will be then the dominant term. Other terms, almost cancelled in the difference between epochs, will be neglected.

$$R_J \vec{\omega} = R_{JJ} \omega_J = (M_{\Phi f}^J(t) - M_{\Phi f}^J(t - \Delta t)) + CS(\Delta t) + \varepsilon_{\Phi f}^J(\Delta t)$$

As cycle slips will be considered as identified in previous pre-processing steps, only the multipath and phase noise terms will be considered. With current receivers technology the phase noise can be considered of a few centimetres, while without HW mitigation techniques the carrier phase multipath can be as high as a quarter of wavelength. Therefore, as measurement noise the value that can be considered is:

$$R_{JJ} = \sigma_J = \frac{2}{3}\left( \lambda/4 \right) = \frac{\lambda}{6}$$

With **Z, H** and **R** defined, the classical weighted RAIM formulation is applicable. The final solution that will be obtained, with corresponding Protection Levels will be:

$$\Delta \hat{\vec{X}}(t) = \hat{\vec{X}}(t) - \vec{X}(t - \Delta t) = (\hat{\vec{X}}_{i-1}^-(t) + \Delta \hat{\vec{X}}_i^-(t)) - \vec{X}(t - \Delta t)$$

$$\Delta \hat{B}(t) = \hat{B}(t) - B(t - \Delta t) = (\hat{B}_{I-1}^{-}(t) + \Delta \hat{B}_{I}^{-}(t)) - B(t - \Delta t)$$

• <u>Pseudorange pre-processing:</u>

• Pseudorange versus carrier phase time consistency test. The pseudorange validation is based on the comparison between the pseudorange temporal evolution and the carrier phase temporal evolution, provided that no cycle slip has occurred, that has been tested above. If the difference is greater than a given threshold, then the new incoming pseudorange measurement is rejected. If this happens, the previous carrier phase and pseudorange are held internally for the comparison in the next epoch. This check may be reset by two reasons: either there has been a detected cycle slip, or the number of consecutive rejected pseudorange measurements is sufficiently high so as to have a significant code/carrier divergence due to the evolution of the ionospheric delay.

• Ionospheric correction for pseudorange and carrier phase. The objective of this algorithm is to estimate the ionospheric delay and correct the ranging measurements. It will also provide the uncertainty of the correction in terms of the variance of the residual error. The computation of the ionospheric delay will be performed according to the approach defined in appendix A of MOPS. The SBAS systems broadcast the vertical ionospheric delays for a predefined set of grid points (IGP), as well as the estimated variance for the residual error. The first step is to computed for each active satellite the position of the corresponding Ionospheric Pierce Point (IPP), which is the intersection between the satellite-to-user Line of Sight (LOS) and an ellipsoid with constant height of 350 km above the reference system ellipsoid; then the surrounding IGPs are identified, and the user ionospheric vertical delay together with the associated error variance are obtained by means of an interpolation scheme according to MOPS. Finally the slant values are generated using an obliquity factor which is a function of the satellite elevation.

Note that the pseudorange smoothing algorithm will compute a non-integer carrier phase ambiguity based on the comparison of the iono-free pseudorange and carrier phase measurements. It is assumed that the error in the ionospheric correction will not change during the time interval of measurements considered for smoothing. If this assumption is not considered, the error variance provided by this algorithm should be enlarged to account for this effect.

• Pseudorange smoothing and error variance estimation. There is specific innovation in this step, which characterizes the local pseudorange errors (multipath and receiver noise) in terms of associated variance, which is part of the method of the present invention. The aim of this function is to interpolate the pseudorange measurements to an intermediate epoch in the measurements time span, based on the comparison with the carrier phase ones, in order to minimise the impact of the receiver noise and multipath. An estimation of the variance of the residual error will be also provided, for its use later on to weight the measurements in the in user position and protection level computation.

The fundamentals of the pseudorange smoothing are the following: for each epoch, the difference between the iono-free pseudorange and carrier phase measurements is a noisy estimation of the ambiguity (a non-integer value is searched for, since the residual errors and the possible biases between both type of measurements do not allow a precise ambiguity resolution). Unless there is a cycle slip in the carrier phase, what is checked above, the ambiguity obtained at each epoch should be the same except for the noise. Thus averaging the snapshot estimated ambiguities for a time interval will decrease the residual error. Note also that the Hatch filter could be used as an alternative to this moving average scheme.

Some additional considerations have to be made prior to obtain the full picture in an enhanced algorithm. This RAIM algorithm for non-controlled environments is intended for both pedestrian and vehicle users that normally move, but also in static conditions. High-level multipath will be experienced in these conditions, although the values will evolve rapidly for a dynamic user, as long as the relative position of the user, the satellite and the reflectors change. However, for a static user, the multipath will evolve quite slowly because the reflectors are assumed to be very close to the user (between few metres and several tens), and thus it will be perceived approximately as a bias for several hundreds of seconds. Consequently a specific mechanism has been defined to minimise the pseudorange noise in the static case using the information of the user velocity:

☐ In initialisation mode, the filter begins to operate and the residual noise is set equal to an a-priori value $(\sigma_{0,noise}^{2})$ sufficiently high so as to provide safe bounds (although probably too high);

□ When the user velocity becomes greater than a certain minimum value ($V_{user,\,min}$), the assumption of a low multipath autocorrelation time is considered valid, and thus the filter enters in its nominal mode computing the iono-free carrier phase ambiguity by means of a weighted average of the snapshot ambiguities. An estimation of the residual error is obtained assuming that it follows a gaussian first-order Gauss-Markov process (the autocorrelation function is exponential). The solution is obtained by means of an iterative process that includes the estimation of the autocorrelation time.

□ When the user velocity becomes then lower than the specified minimum value (assuming that the time elapsed above this threshold is greater than a minimum value ($T_{min}$) to be determined through experimentation), the last estimated ambiguity as an output from the filter and the associated variance will be fixed and no update will be in principle performed. However the filter continues working under the assumptions that the measurement noise is composed of a bias (considering the characteristic time of several hundreds seconds) plus a gaussian white noise. The difference between the filter output and the fixed ambiguity is an estimation of the bias, which is stored and used in case of a detected cycle slip causing the reset of the filter.

It should be noted that the proposed strategy is completely valid in case the filter output is used with a certain latency, corresponding to an intermediate epoch of those stored snapshot ambiguities, since the filtered value and associated variance is valid for the whole considered time interval.

The main steps of the algorithm are the following:

1. For each active satellite "i", compute the snapshot carrier phase non-integer ambiguity, comparing the iono-free pseudorange and carrier phase measurements for the current epoch:

$$N_i(t_k) = \rho_{i,iono-free}(t_k) - \Phi_{i,iono-free}(t_k)$$

2. Update the buffer of ambiguities by removing the oldest one (if the buffer is full) and adding the previously computed ambiguity. If the number of ambiguities is above a certain minimum number ($N_{min}$), the filter can provide the expected outputs.

3. If the user is in initialisation mode, compute the average of the stored ambiguities ($\tilde{N}_i(t_k)$) and set the residual error covariance $(\sigma^2_{i,smoothed}(t_k))$ equal to the a-priori specified value:

$$\tilde{N}_i(t_k) = \frac{1}{M} \sum_{l=0}^{M-1} N_i(t_{k-l})$$

$$\sigma^2_{i,smoothed}(t_k) = \sigma^2_{0,noise}$$

4. If the user velocity becomes greater than a certain minimum value ($V_{user,min}$) for at least a certain minimum time ($T_{min}$), compute first the parameter that defines the Gauss-Markov process, then the estimated ambiguity, and finally the residual error covariance by means of a weighted average scheme as follows:

$$N_i(t_k) = F_i \cdot N_i(t_{k-1}) + w_{i,k} \qquad w_{i,k} \in N\left(0, \sqrt{1-F_i^2} \cdot \sigma_{i,noise}\right)$$

"F" is estimated by means of a least-square estimator:

$$B = A \cdot \tilde{F} \qquad \tilde{F} = \left[A^T \cdot A\right]^{-1} \cdot A^T \cdot B$$

where:

$$A = \begin{bmatrix} N_i(t_{k-M+1}) \\ N_i(t_{k-M+2}) \\ \cdots \\ N_i(t_{k-1}) \end{bmatrix} \quad B = \begin{bmatrix} N_i(t_{k-M+2}) \\ N_i(t_{k-M+3}) \\ \cdots \\ N_i(t_k) \end{bmatrix}$$

The residual noise variance is also estimated by means of a chi-square distribution assuming a certain confidence level (CL):

$$\sigma^2_{i,measurement\ noise}(t_k) = \frac{1}{(1-\tilde{F}_i^2)\cdot \chi^2_{M-2,\%CL}} \cdot \sum_{j=0}^{M-2}\left(N_i(t_{k-j}) - \tilde{F}_i \cdot N_i(t_{k-j-1})\right)^2$$

Then the estimated ambiguity is obtained by means of the weighted average as follows:

$$\tilde{N}_i(t_k) = \frac{N_i(t_k) + N_i(t_{k-M+1}) + (1-\tilde{F}_i)\cdot \sum_{l=1}^{M-2} N_i(t_{k-l})}{M \cdot (1-\tilde{F}_i) + 2\cdot \tilde{F}_i}$$

The equivalent number of independent samples ($IS_i(t_k)$) is estimated accordingly by means of the following expression:

$$IS_i(t_k) = \frac{M \cdot (1-F_i) + 2\cdot F_i}{1 + F_i}$$

The covariance of the residual error is then:

$$\sigma^2_{i,smoothed}(t_k) = \frac{\sigma^2_{i,measurement\ noise}(t_k)}{IS_i(t_k)}$$

$$\tilde{N}_i(t_k) = \tilde{N}_i(t_{V\ min})$$

$$\sigma^2_{i,smoothed}(t_k) = \sigma^2_{i,smoothed}(t_{V\ min})$$

However the filter continues working trying to estimate the bias caused by the multipath:

$$\tilde{N}_{i,biased}(t_k) = \frac{\sum_{l=0}^{M-1} N_i(t_{k-l})}{M}$$

$$S^2_{i,biased}(t_k) = \frac{\sum_{l=0}^{M-1}\left(N_l(t_{k-l}) - \tilde{N}_{l,biased}(t_k)\right)^2}{M}$$

$$\sigma^2_{i,biased}(t_k) = \frac{1}{M-1}\cdot\left(S_{i,biased}(t_k)\cdot\frac{t_{M-1,md}}{K_{N,md}}\right)^2$$

$$MBias_i(t_k) = \tilde{N}_i(t_{V\min}) - \tilde{N}_{i,biased}(t_k)$$

$$\sigma^2_{i,MBias}(t_k) = \sigma^2_{i,biased}(t_k) + \sigma^2_{i,smoothed}(t_{V\min})$$

where:

- $t_{M-1,md}$ is the point of the t-Student distribution with "M-1" degrees of freedom that leaves in the tails (two-tail problem) a probability equal to the missed detection probability assigned to the whole RAIM algorithm.
- $K_{N,md}$ is the point of the Gaussian distribution (zero mean and variance equal to 1) that leaves in the tails (two-tail) problem a probability equal to the missed detection probability assigned to the whole RAIM algorithm;

6. If there is a cycle slip, the smoothing filter is reset and the buffer of stored snapshot ambiguities is deleted. New output is provided when the number of new stored ambiguities reaches a minimum. Additionally if the user velocity is below the minimum, the first new biased ambiguity is corrected with the latest computed bias and then it is fixed:

$$\tilde{N}_i(t_{after\ cycle\ slip}) = \tilde{N}_{i,biased}(t_{i,cycle\ slip} + \Delta t_{\min}) + MBias_i(t_{i,cycle\ slip} - 1)$$

$$\sigma^2_{i,smoothed}(t_{after\ cycle\ slip}) = \sigma^2_{i,biased}(t_{i,cycle\ slip} + \Delta t_{\min}) + \sigma^2_{i,MBias}(t_{i,cycle\ slip} - 1)$$

As long as the time passes the bias is estimated following the same approach as before, to react against new cycle slips.

7. If the user velocity becomes again greater than the minimum value ($V$user,min) for at least the minimum time ($T_{\min}$), the filter output as specified in step "4" substitutes the previous one.

8. Compute the smoothed pseudorange:

$$\tilde{p}_{i,Iono-free}(t_k) = \tilde{N}_i(t_k) + \Phi_{i,Iono-free}(t_k)$$

- Measurement classification. The measurements classification, to determine the usability for navigation and integrity comprises the following steps:

  - Ranking ordering of the pre-processed measurements according to their characterisation, from better to worst.
  - Rejection of those measurements labelled for rejection during the previous pre-processing. This step should be by-passed in case of lack of enough measurements for computing the navigation solution. There must be available at least the same number of pseudorange measurements than the state vector dimension.
  - Measurements selection: In this stage not all the non-rejected measurements have to be used for navigation and integrity. As the characterisation of the measurements could have not been perfect, in particular in the case of the worst measurements with larger errors, is better to use the minimum set of the best measurements being enough for the expected performances.

## Navigation and Integrity computation

- Pseudoranges weight update. As part of the innovation of the present invention, the variance of the noise of each pseudorange i will be computed according to the equation in MOPS specification, updating the multipath term with the characterisation from the innovative Pseudorange smoothing and error variance estimation step above.

$$\sigma_i^2 = \sigma_{i,flt}^2 + \sigma_{i,UIRE}^2 + \sigma_{i,air}^2 + \sigma_{i,tropo}^2$$

$$\sigma_{i,air}^2 = \sigma_{i,noise}^2 + \sigma_{i,multipath}^2 + \sigma_{i,divg}^2$$

And the weight matrix, W, is built as:

$$W^{-1} = \begin{bmatrix} \sigma_1^2 & 0 & \cdots & 0 \\ 0 & \sigma_2^2 & \cdots & 0 \\ \vdots & \vdots & \ddots & \vdots \\ 0 & 0 & \cdots & \sigma_N^2 \end{bmatrix}$$

- KDOP test. The objective of this test is to determine for which measurements an error in the pseudorange characterisation can have a negative effect in the positioning error, in order to exclude them from the final set of measurements to be used for navigation and integrity. KDOP definition is found in "Navstar GPS user equipment introduction" (1996). The test computes a weighted DOP, comparing the pseudoranges weights in an "*a priori*" pseudorange noise model with the updated pseudoranges weight.

$$H'^{\bullet} = (H^T W' H) H^T W'$$

$$D = H'^{\bullet} W^{-1} H'^{\bullet T}$$

$$KDOP = \sqrt{trace(D)}$$

Where:

W'    "a priori" weight matrix
W     Updated current weight matrix

KDOP is computed for the set of N measurements and for all the N-1 subsets. Those measurements that make the N set to have worst KDOP than the N-1 subset excluding that measurement will be rejected for further processing. The test will be repeated until that the test is passed or until that there is at least one redundant measurement to allow to apply RAIM.

The case considering W'= I is described in the literature ("Integrity measure for assisted GPS based on weighted dilution of precision", H. Sairo, J. Syrjärinne, J. Lepäkoski and J. Takala, ION GPS 2002 (September 2002)), where the D matrix used for KDOP yields to:

$$D = (H^T H)^{-1} H^T W^{-1} H (H^T H)^{-1}$$

while here we are considering an enhanced non simplified expression in order take into account in W the reliable available SBAS information.

- SBAS weighted navigation and Protection level PL computation based on weighted RAIM for multiple failure case, which is also a specific part of the present invention. The navigation and integrity will use only those smoothed pseudoranges corresponding to satellites that have not been rejected in any of the previous tests. The MOPS specification scheme for PA with a RAIM algorithm in parallel (MOPS, section 2.1.5 *"Requirements for APV-II and GLS Precision Approach Operations"),* will be used for positioning and integrity with the following modifications:

  - Use of the updated pseudorange weight, instead of the "a priori" MOPS model
  - There must be at least 1 redundant measurement over the state vector dimension, in order to check the positioning solution with the RAIM FD test.
  - The protection levels will be computed either for the case of single failure or for the multiple failure case, depending on the final application. The case of computation of Protection Levels in case of double failure is described in "Solution of the two failure GPS RAIM problem under the worst case bias conditions: parity space approach", R. Grover Brown, NAVIGATION, Vol. 44, No. 4 (Winter 1997-98). We have available the demonstration for the generalized problem with multiple failure.
    The classical expression of the Protection Levels is obtained maximizing the error in the elements of the state vector due to the failure in one measurement that yields to an increment in the Chi-squared test statistic on the measurements residuals to detect failures. This demonstration has to be enhanced to consider a multiple failure. This is made introducing additional constraints in the problem to be maximized.
  - One constraint consisting in that the multiple failure yields to a constant value of the chi squared test.
  - A second constraint consists in defining the failure mode. From all the possible combinations of satellites, only the combinations of any given number M of satellites is allowed.

These two additional constraints introduce a generalized optimisation problem with constraints to be managed with Lagrange mathematical techniques.

The demonstration of the generalized problem follows. The definition of the terms to be used are based in the measurement equation:

$$\widetilde{Z} = H\widetilde{x} + R\bar{n} + \bar{b}$$

where:

$\widetilde{Z}$ Vector of measurements

$H$ Observation matrix, assuming that the estimation problem is linear

$\widetilde{x}$ True state vector

$R$ Measurement noise matrix.

$\bar{n}$ Vector of independent normal noises, with $n_i \in N(0,1)$

$\bar{b}$ Offset failure error vector.

The state vector solution, obtained by least squares, is:

$$\hat{x} = H^\bullet \widetilde{Z}$$

where the pseudoinverse matrix is:

$$H^\bullet = \left( H^T P H \right)^{-1} H^T P$$

where P is the correlation and weight matrix between the measurements. It is obtained as:

$$P = \left[R^{-1}\right]^{T}\left[R^{-1}\right] = \left[RR^{T}\right]^{-1}$$

Due to the measurement noise, including the failure, the estimation of the state vector $\hat{x}$ will contain some error. The measurement can be written as function of the estimated state vector $\hat{x}$ and a vector of measurements residuals $\vec{\varepsilon}$ as:

$$\tilde{Z} = H\hat{x} + \vec{\varepsilon}$$

With this formulation, defining the state vector error due to the measurements error vector $\vec{b}$, as:

$$\Delta \vec{x} = \left\{ \begin{array}{c} \Delta x_1 \\ \Delta x_j \\ \Delta x_m \end{array} \right\} = H^{\bullet}\vec{b}$$

If we are interested in the knowledge of the error only in some coordinates (e.g. vertical error or horizontal error) the submatrix of the pseudo-inverse $H^*$ matrix with the rows j corresponding to the state vector coordinates of interest is:

$$A_{SUB(j_1,\cdots j_2)} = \begin{vmatrix} \vec{0} \\ H^{\bullet}_{j_1} \\ \vdots \\ H^{\bullet}_{j_2} \\ \vec{0} \end{vmatrix}$$

The module of the total error of the coordinates of interest is:

$$J_1 = \Delta \vec{x}^{T}_{(j_1,\cdots j_2)} \Delta \vec{x}_{(j_1,\cdots j_2)} = \vec{b}^{T} A^{T}_{SUB(j_1,\cdots j_2)} A_{SUB(j_1,\cdots j_2)} \vec{b}$$

But the measurements error vectors are conditioned by the fact that they are being detected through the $\chi^2$ test statistic p on the measurements residuals, computed as:

$$\rho^2 = \frac{\vec{\xi}^{T}\vec{\xi}}{(N-m)} = \frac{\vec{b}^{T} S\vec{b}}{(N-m)}$$

where $N$ is the number of measurements, $m$ the number of unknown terms in the state vector, and the normalised residuals $\vec{\xi}$ are obtained from the measurement equation by the relationship $\vec{\varepsilon} = \tilde{Z} - H\hat{x} = R\vec{\xi}$ that takes into account the measurement noise R.

This yields to the squared sum of residuals in the case of failure $\tilde{Z} = \vec{b}$ as:

27

$$\bar{\xi}^T \bar{\xi} = \hat{\varepsilon}^T P \hat{\varepsilon} = \tilde{Z}^T (I - HH^*)^T (I - HH^*) \tilde{Z} = \tilde{Z}^T (I - HH^*) \tilde{Z} = \bar{b}^T S \bar{b}$$

where $S=I-HH^*$

From the $\chi^2$ test statistic the constraint to be imposed to the measurements error vectors b is:

$$\rho^2 - 1 = \frac{\bar{b}^T S \bar{b}}{(N-m)} - 1 = 0$$

Under this constraint, the maximisation of the total error is afforded using the Lagrange method in the function:

$$J = J_1 - \lambda_1 (\rho^2 - 1) = \bar{b}^T A^T_{SUB(j_1,\cdots j_2)} A_{SUB(j_1,\cdots j_2)} \bar{b} - \lambda_1 \left( \frac{\bar{b}^T S \bar{b}}{(N-m)} - 1 \right)$$

The notation can be simplified using $\lambda = \dfrac{\lambda_1}{(N-m)}$:

$$J = \bar{b}^T A^T_{SUB(j_1,\cdots j_2)} A_{SUB(j_1,\cdots j_2)} \bar{b} - \lambda \left( \bar{b}^T S \bar{b} - (N-m) \right)$$

The maximization of $J$ cannot be afforded yet. The matrix $S$ has rank $N-m$ and therefore there shall be a family of measurements error vectors b in the null space of the matrix $S$: $S\bar{b} = \bar{0}$. These vectors can be as big as desired, yielding to a value for $J$ also as big as desired. So the state vector error can be as big as desired but "inobservable", or "undetectable".

Now we introduce the concept of the *"failure mode"*. The maximization of the function $J$ has to be solved considering a subset of measurements error vectors $\bar{b}$ belonging to a sub-space of failure modes under test. This hypothesis is made, e.g., when the worst case of single measurement failure is being tested under RAIM. In general, any error vector $\bar{b}$ is built from a family of failure modes V by:

$$\bar{b} = V \bar{e} = \{ \bar{v}_1, \cdots \bar{v}_M \} \bar{e}_M$$

The function J restricted to the sub-space of failure modes under test is:

$$J = \bar{e}^T V^T A^T_{SUB(j_1,\cdots j_2)} A_{SUB(j_1,\cdots j_2)} V \bar{e} - \lambda \left( \bar{e}^T V^T S V \bar{e} - (N-m) \right)$$

Looking for the maximization of the function J yields to:

$$\frac{\partial J}{\partial \bar{e}} = 2 \left( V^T A^T_{SUB(j_1,\cdots j_2)} A_{SUB(j_1,\cdots j_2)} V - \lambda V^T S V \right) \bar{e} = \bar{0}$$

$$\frac{\partial J}{\partial \lambda} = \bar{e}^T V^T S V \bar{e} - (N-m) = 0$$

In order to find the solution of this set of equations the generalized eigen-value problem to be solved is:

$$\left(V^T A^T_{SUB(j_1,\cdots j_2)} A_{SUB(j_1,\cdots j_2)} V - \lambda V^T S V\right)\vec{e} = \vec{0}$$

One of the solutions is the vector $\vec{e}_{MAX}$ corresponding to the eigen-value $\lambda_{MAX}$. With this solution the function J provides the squared module of the maximum state vector error, *for the failure mode* under test. Therefore the term max{*SLOPE*}, that relates the state vector error with the $\chi^2$ test statistic p is easily obtained:

$$\begin{aligned}
\max\{SLOPE\} &= \sqrt{\lambda_{MAX}} = \sqrt{(N-m)\lambda_{MAX}} \\
&= \sqrt{(N-m)\frac{\vec{e}^T_{MAX} V^T A^T_{SUB(j_1,\cdots j_2)} A_{SUB(j_1,\cdots j_2)} V \vec{e}_{MAX}}{\vec{e}^T_{MAX} V^T S V \vec{e}_{MAX}}} \\
&= \sqrt{\frac{\Delta\bar{x}^T_{(j_1,\cdots j_2)}\Delta\bar{x}_{(j_1,\cdots j_2)}}{\rho^2}} = \frac{\left|\Delta\bar{x}_{(j_1,\cdots j_2)}\right|}{\rho}
\end{aligned}$$

With this max{*SLOPE*} value, the Protection Level PL for the state vector coordinates of interest is, in line with "Weighted RAIM for precision approach" T. Walter, P. Enge, ION GPS (1995):

$$PL = \max\{SLOPE\}\times\gamma_{norm}(P_{FA}) + k_n(P_{MD})\sqrt{\sum_{i=j_1}^{i=j_2}\left[\left(H^T P H\right)^{-1}\right]_{ii}}$$

The final results of the method of the present invention for the end-user will be:

- Positioning solution,
- Associated RAIM protection level values,
- Integrity flag corresponding to the RAIM FD test for the set of measurements used in positioning
- Velocity vector, resultant of the RAIM applied to the Carrier Phase measurements.

Depending of the intended final service, and considering the velocity vector, the protection levels can be expressed as:

- One global horizontal protection level.
- Cross track protection levels, based in the velocity vector or in the known road lane vector.
- Comparison of the protection levels with any rectangular limit area:

In road applications, more interesting than the horizontal protection level is to know the cross track and along track protection level. For their computation the following approach is proposed:

1. Use a local horizon intrinsic reference frame.

- X-axis will be aligned with the estimated velocity, or the road lane,
- Y-axis will be right hand perpendicular and horizontal to the X-axis.
- Z-axis will be the local vertical.

2. Transform the state vector to these axis, and compute the following one-dimensional Protection Levels:

- Cross Track Protection Level: Y-axis Protection Level.
- Along Track Protection Level: X-axis Protection Level
- Vertical Protection Level: Z-axis Protection Level.

**Claims**

1. A method for providing a Global Navigation Satellite System (GNSS) navigation position solution with guaranteed integrity in non-controlled environments, a non-controlled environment being an environment where assumptions of an *a priori* measurements noise model and of a single failing measurement as worst case are both not applicable, said guaranteed integrity based on protection levels; the method comprises:

   - processing a Global Navigation Satellite System (GNSS) signal to obtain carrier phase and pseudoranges measurements,
   - carrying out a pre-processing of said measurements in order to detect and characterize local errors in said measurements, which local errors cannot be assumed *a priori,* said characterization including providing error bounds estimated by evaluating said carrier phase and pseudoranges measurements, and providing a set of measurements rejections when said characterization is not possible;
   - using said estimated error bounds, together with those already provided by the signal itself about satellite and ionospheric errors, to build in each measurement an estimated noise level in said measurements as input to a weighted Receiver Autonomous Integrity Monitoring (RAIM) algorithm in order to compute position coordinates and associated protection levels, based on said carrier phase and pseudoranges measurements.

2. Method according to claim 1, wherein said detection and characterization of local errors comprises:

   - using traditional carrier phase step detectors and cycle slip detectors together with a carrier phase RAIM algorithm, for the detection and rejection of reflected signal errors.

3. Method according to any preceding claim, wherein said detection and characterization of local errors comprises:

   - using improved pseudoranges smoothing technologies and error variance estimation, for the detection and characterization of multipath errors.

4. Method according to any preceding claim, wherein said weighted RAIM algorithm computes the associated protection levels based on real-time pseudoranges weights updates taking into consideration said characterization of measurements.

5. Method according to any preceding claim, wherein said weighted RAIM algorithm computes the associated protection levels considering the possibility of multiple failed measurements.

6. Method according to claim 2, wherein said carrier phase RAIM algorithm excludes multipath reflected measurements based on inconsistencies between observed Doppler effect and velocity vector, in order to ensure detection and exclusion of multipath reflected measurements and to compute velocity and associated protection levels.

7. Method according to any preceding claim, wherein ionospheric errors are compensated based on two frequency measurements.

8. Method according to any preceding claim, wherein smoothed pseudoranges are computed based on a real-time filter.

9. Method according to any preceding claim, wherein it comprises using a Carrier Phase RAIM algorithm, based on inconsistencies between the observed Doppler effect in the accumulated Carrier Phase measurements and the velocity vector, in order to ensure detection and exclusion of multipath reflected measurements and to compute velocity and associated protection levels, said algorithm modifies the classical weighted RAIM formulation for pseudoranges, redefining for the carrier phase the measurements vector Z, the observation matrix H, and the measurements noise matrix R as follows:

   - the measurement term Z is the difference between the measured and estimated accumulated carrier phase measurement:

$$\bar{Z} = \left\{ \begin{matrix} \vdots \\ \Delta\tilde{\Phi}^j - \Delta\hat{\Phi}^j \\ \vdots \end{matrix} \right\} .$$

where the estimated accumulated carrier phase measurement is:

$$\Delta\hat{\Phi}^j = \left\{ \begin{matrix} \hat{\rho}^{j\bar{}}_i(t)\Big|_{\Delta\bar{X}(t)=\bar{0}} - \hat{\rho}^j(t-\Delta t) + c(\tilde{B}^{\bar{}}_i(t) - \tilde{B}(t-\Delta t)) \\ - c(dt^j(t) - dt^j(t-\Delta t)) \\ + (T^j(t) - T^j(t-\Delta t)) - (I^j(t) - I^j(t-\Delta t)) \\ + CS(\Delta t) \end{matrix} \right.$$

where, for each previous $t-\Delta t$ and current $t$ epochs, $\hat{\rho}^{j\bar{}}_i$ is the estimated range from the receiver to satellite $j$; $c\tilde{B}$ is the true receiver clock bias; $cdt^j$ is he satellite clock offset, computed with the broadcast ephemeris and available corrections; $I^j$ represents the ionospheric effect; $T^j$ is the tropospheric delay; and $CS(\Delta t)$, represents the cycle slip effect;
- each row $hj$ of the observation or information matrix **H** is, as usual, the partial derivate of the measurement equation with respect to the state vector $\bar{X}$, recalculated as the measurements and state vector are different than in the classical positioning RAIM with pseudoranges:

$$h_j = \left[ \frac{\partial(\Delta\Phi^j)}{\partial\bar{X}}\bigg|_{\bar{X}^{\bar{}}_i(t)}, \quad \frac{\partial(\Delta\Phi^j)}{\partial(\Delta B)}\bigg|_{B^{\bar{}}_i(t)} \right] = \left[ -\frac{\bar{X}^j(t)^T - \bar{X}^{\bar{}}_i(t)}{\left|\bar{X}^j(t)^T - \bar{X}^{\bar{}}_i(t)\right|}, \quad 1 \right] ;$$

- each term in the measurement noise matrix R, used to build the weight matrixes, is now defined by the noise of the "*a priori*" nominal accumulated carrier phase measurement, which are dominated by the difference of multipath between epochs that can be as high as a quarter of wavelength $\lambda$, as cycle slips are considered identified in previous pre-processing steps and other terms have a negligible evolution along the carrier phase accumulation period; therefore the value of the noise of each carrier phase measurement can be considered as:

$$R_{jj} = \sigma_j = \frac{2}{3}\left(\lambda\!/\!4\right) = \frac{\lambda}{6} .$$

10. Method according to any preceding claim, wherein it uses an algorithm that, based in the time correlation of the multipath error, characterizes the local pseudorange errors -multipath and receiver noise- in terms of associated variance, wherein measurements with excessive multipath errors are excluded for later computations and multipath is mitigated in valid measurements, the algorithm comprises the following steps:

- for each active satellite "i", compute the snapshot carrier phase non-integer ambiguity $N_i(t_k)$, comparing the iono-free pseudorange $\rho_{i,iono\text{-}free}(t_k)$ and carrier phase measurements $\Phi_{i,iono\text{-}free}(t_k)$ for the current epoch:

$$N_i(t_k) = \rho_{i,iono\text{-}free}(t_k) - \Phi_{i,iono\text{-}free}(t_k)$$

- update the buffer of ambiguities by removing the oldest one, if the buffer is full, and adding the above computed ambiguity, if the number of ambiguities is above a certain minimum number ($N_{min}$), the filter can provide the expected outputs;
- if the user is in initialisation mode, compute the average of the stored ambiguities ($\tilde{N}_i(t_k)$) as

$$\tilde{N}_i(t_k) = \frac{1}{M} \sum_{l=0}^{M-1} N_i(t_{k-l})$$

and set up the covariance of the residual error of the smoothed pseudorange ($\sigma^2_{i,smoothed}(t_k)$) equal to the a-priori specified value

$$\sigma^2_{i,smoothed}(t_k) = \sigma^2_{0,noise} \; ;$$

- if the user velocity becomes greater than a certain minimum value ($V_{user,min}$) for at least a certain minimum time ($T_{min}$), compute first the parameter F that defines the Gauss-Markov process

$$N_i(t_k) = F_i \cdot N_i(t_{k-1}) + w_{i,k} \quad w_{i,k} \in N\left(0, \sqrt{1 - F_i^2} \cdot \sigma_{i,noise}\right),$$

that modelizes the time correlation of the multipath error, then the estimated ambiguity $\tilde{N}_i(t_k)$, and finally the covariance of the residual error of the smoothed pseudorange $\sigma^2_{i,smoothed}(t_k)$ by means of a weighted average scheme as follows:

F is estimated by means of a least-square estimator:

$$\tilde{F} = \left[A^T \cdot A\right]^{-1} \cdot A^T \cdot B$$

where: $A = \begin{bmatrix} N_i(t_{k-M+1}) \\ N_i(t_{k-M+2}) \\ ... \\ N_i(t_{k-1}) \end{bmatrix} \quad B = \begin{bmatrix} N_i(t_{k-M+2}) \\ N_i(t_{k-M+3}) \\ ... \\ N_i(t_k) \end{bmatrix}$ and $B = A \cdot \tilde{F}$;

then the estimated ambiguity is obtained by means of the weighted average as follows:

$$\tilde{N}_i(t_k) = \frac{N_i(t_k) + N_i(t_{k-M+1}) + (1 - \tilde{F}_i) \cdot \sum_{l=1}^{M-2} N_i(t_{k-l})}{M \cdot (1 - \tilde{F}_i) + 2 \cdot \tilde{F}_i}$$

and the covariance of the residual error of the smoothed pseudorange is:

$$\sigma^2_{i,smoothed}(t_k) = \frac{\tilde{\sigma}^2_{i,measurement\ noise}(t_k)}{IS_i(t_k)}$$

where the noise variance of the measured ambiguity is estimated by means of a chisquare $\chi^2_{M-2,\%CL}$ distribution assuming M-2 degrees of freedom and a requested confidence level (CL):

$$\tilde{\sigma}^2_{i,measurement\ noise}(t_k) = \frac{1}{(1-\tilde{F}_i^2)\cdot \chi^2_{M-2,\%CL}} \cdot \sum_{j=0}^{M-2}\left(N_i(t_{k-j}) - \tilde{F}_i \cdot N_i(t_{k-j-1})\right)^2$$

and the equivalent number of independent samples (ISi(tk)) is estimated accordingly by means of the following expression:

$$IS_i(t_k) = \frac{M \cdot (1-F_i) + 2 \cdot F_i}{1 + F_i} \quad ;$$

- if the user velocity becomes lower than the minimum value then the ambiguity is fixed to the one for which the.velocity took that value (epoch "tV min"):

$$\tilde{N}_i(t_k) = \tilde{N}_i(t_{V\min})$$

$$\sigma^2_{i,smoothed}(t_k) = \sigma^2_{i,smoothed}(t_{V\min})$$

whit the filter continues working estimating the bias $MBias_i(t_k)$ caused by the multipath as difference between the average of the ambiguity and the reference fixed ambiguity:

$$\tilde{N}_{i,biased}(t_k) = \frac{\sum_{l=0}^{M-1} N_i(t_{k-l})}{M}$$

$$S^2_{i,biased}(t_k) = \frac{\sum_{l=0}^{M-1}\left(N_i(t_{k-l}) - \tilde{N}_{i,biased}(t_k)\right)^2}{M}$$

$$\sigma^2_{i,biased}(t_k) = \frac{1}{M-1} \cdot \left(S_{i,biased}(t_k) \cdot \frac{t_{M-1,md}}{K_{N,md}}\right)^2$$

$$MBias_i(t_k) = \tilde{N}_i(t_{V\,min}) - \tilde{N}_{i,biased}(t_k)$$

$$\sigma^2_{i,MBias}(t_k) = \sigma^2_{i,biased}(t_k) + \sigma^2_{i,smoothed}(t_{V\,min})$$

with $t_{M-1,md}$ the point of the t-Student distribution with "M-1" degrees of freedom that leaves in the tails (two-tail problem) a probability equal to the missed detection probability (md) assigned to the whole RAIM algorithm and being $K_{N,md}$ the point of the Gaussian distribution, zero mean and variance equal to 1, that leaves in the tails (two-tail) problem a probability equal to the missed detection probability assigned to the whole RAIM algorithm;
- if there is a cycle slip, the smoothing filter is reset and the buffer of stored snapshot ambiguities is deleted; a new output is provided when the number of new stored ambiguities reaches a minimum and additionally if the user velocity is below the minimum, the first new biased ambiguity is corrected with the latest computed bias and then it is fixed:

$$\tilde{N}_i(t_{after\ cycle\ slip}) = \tilde{N}_{i,biased}(t_{i,cycle\ slip} + \Delta t_{min}) + MBias_i(t_{i,cycle\ slip} - 1)$$

$$\sigma^2_{i,smoothed}(t_{after\ cycle\ slip}) = \sigma^2_{i,biased}(t_{i,cycle\ slip} + \Delta t_{min}) + \sigma^2_{i,MBias}(t_{i,cycle\ slip} - 1)$$

and as long as the time passes the bias is estimated following the same approach as before, to react against new cycle slips;
- if the user velocity becomes again greater than the minimum value ($V_{user,min}$) for at least the minimum time ($T_{min}$), the filter output substitutes the previous one computing the iono-free smoothed pseudorange as:

$$\tilde{\rho}_{i,iono-free}(t_k) = \tilde{N}_i(t_k) + \Phi_{i,iono-free}(t_k)$$

wherein
$\tilde{N}_i(t_k)$ is the estimated ambiguity,
$\Phi_{i,iono-free}(t_k)$ is the iono-free carrier phase measurement for the current epoch;

and with associated covariance of the residual error of the smoothed pseudorange $\sigma^2_{i,smoothed}(t_k)$ computed as defined above.

11. Method according to any preceding claim, wherein in order to compute the weights of the pseudorange errors, the variance of the noise of each pseudorange $i$ is computed according to the equations in the Minimum Operations Performance Standards (MOPS) updating the multipath term with the characterization from the pseudorange smoothing and error variance estimation $\sigma^2_{i,multipath} = \sigma^2_{i,smoothed}(t_k)$:

$$\sigma^2_i = \sigma^2_{i,flt} + \sigma^2_{i,UIRE} + \sigma^2_{i,air} + \sigma^2_{i,tropo}$$

$$\sigma^2_{i,air} = \sigma^2_{i,noise} + \sigma^2_{i,multipath} + \sigma^2_{i,divg}$$

and the weight matrix W is built as:

$$W^{-1} = \begin{bmatrix} \sigma_1^2 & 0 & \cdots & 0 \\ 0 & \sigma_2^2 & \cdots & 0 \\ \vdots & \vdots & \ddots & \vdots \\ 0 & 0 & \cdots & \sigma_N^2 \end{bmatrix}$$

**12.** Method according to any preceding claim, wherein it uses an algorithm for computation of the Protection Level based on weighted RAIM for multiple failure case, said algorithm uses the following equation:

$$PL = \max\{SLOPE\} \times \gamma_{norm}(P_{FA}) + k_n(P_{MD})\sqrt{\sum_{i=j_1}^{i=j_2}\left[(H^T PH)^{-1}\right]_{ii}}$$

where:

PL is the Protection level for the state vector coordinates of interest to protect,
Max{SLOPE} is the worst relation between the error in the state vector coordinates of interest and the Chi-squared $\chi^2$ test statistic $\rho$,
$\gamma_{norm}(P_{FA})$ is the threshold of the RAIM Failure detection test, for a given False Alarm probability PFA,
$k_n(P_{MD})$ is the number of standard deviations in a n-dimensions (those of the state vector coordinates of interest to protect) gaussian distribution that left out a probability corresponding to the specified probability of missdetection PMD,
H is the observation matrix,
P is the correlation and weight matrix between the measurements;

wherein Max{SLOPE} is obtained maximizing the error in the set of elements of the state vector due to the multiple measurement failure that yields to an increment in the Chi-squared test statistic on measurements residuals to detect failures; introducing in the computation of this maximization additional constraints (managed with Lagrange mathematical techniques) over the classical formulation:

- one constraint consisting in that the multiple failure yields to a constant value of the chi squared test,
- and a second constraint consisting in defining the failure mode so that from all the possible combinations of satellites only the combinations of any given number M of satellites is allowed;

therefore the value obtained for Max{SLOPE} is:

$$\max\{SLOPE\} = \sqrt{\lambda_{1_{MAX}}} = \sqrt{(N-m)\lambda_{MAX}}$$

where $\lambda_{max}$ is the maximum eigen-value, corresponding to a vector $\vec{e}_{MAX}$, which are one of the solutions to the generalized eigen-value problem:

$$\left(V^T A^T_{SUB(j_1,\cdots j_2)} A_{SUB(j_1,\cdots j_2)} V - \lambda V^T SV\right)\vec{e} = \vec{0}$$

where:
V represents a sub-space of failure modes under test (The concept of the "failure mode" considers a subset of measurements error vectors $\vec{b}$ belonging to a sub-space of failure modes under test so that any error vector $\vec{b}$ can

35

be built from a family of failure modes V generated from the unitary vectors $\vec{e}_i$ in the measurement space by:

$$\vec{b} = V\vec{e} = \{\vec{v}_1, \cdots \vec{v}_M\}\vec{e}_M$$

and so, with M measurements, the single failures are represented by M cases of one dimension subspaces, and for multiple failures of $n_F$ measurements there will have to be considered all the combinations of M measurements in groups of $n_F$ represented by

$$V_{SUB(j_1, \cdots j_{n_F})} = \begin{vmatrix} \vec{0} & \vec{0} \\ 1_{j_1} & \vdots \\ \vdots & \cdots & \vdots \\ \vdots & 1_{j_{n_F}} \\ \vec{0} & \vec{0} \end{vmatrix}_{M, n_F}$$

$A_{SUB(j_1, \cdots j_2)}$ is the submatrix of the pseudo-inverse matrix $H^* = (H^T P H)^{-1} H^T P$, of the state vector least squares solution $\hat{x} = H^* Z$, with the rows $j$ corresponding to the state vector coordinates of interest:

$$A_{SUB(j_1, \cdots j_2)} = \begin{vmatrix} \vec{0} \\ H_{j_1}^{\bullet} \\ \vdots \\ H_{j_2}^{\bullet} \\ \vec{0} \end{vmatrix}$$

with P the correlation and weight matrix between the measurements and $S = I - HH^*$.

13. A system to provide a GNSS navigation position solution of at least one mobile unit with guaranteed integrity in non-controlled environments, a non-controlled environment being an environment where assumptions of an a priori measurements noise model and of a single failing measurement as worst case are both not applicable; said guaranteed integrity based on protection levels, wherein said at least one mobile unit (10) comprises:

- a GPS/SBAS receiver (11) to receive a Global Navigation Satellite System (GNSS) signal (1),
- means for processing said GNSS signal to obtain carrier phase and pseudoranges measurements,
- means for carrying out a pre-processing of said measurements in order to detect and characterize local errors in said measurements, said characterization including providing error bound estimated by evaluating said carrier phase and pseudoranges measurements, and providing a set of measurements rejections when said characterization is not possible,
- means for using said error bounds, together with those already provided by the signal itself about satellite and ionospheric errors, to build in each measurement an estimated noise level in said measurements as input to a weighted Receiver Autonomous Integrity Monitoring (RAIM) algorithm in order to compute position coordinates and associated protection levels, based on said carrier phase and pseudorange measurements.

14. System according to claim 13, wherein the mobile unit (10) further comprises a wireless data telecommunications transceiver (13), arranged to send said computed position coordinates and associated protection levels to a central platform (20), which is arranged to provide at least one authorized user (30) with said position coordinates of said mobile unit (20) together with an associated integrity guarantee information.

15. System according to any of claims 13-14, wherein said mobile unit (10) has interfaces with other external devices.

**16.** System according to any of claims 13-15, wherein said mobile unit (10) has an interface with an odometer located in the mobile unit, in order to use measurements from the odometer to obtain position estimates during GPS and/or Galileo outages.

**17.** System according to any of claims 13-16, wherein said mobile unit (10) has an interface with an odometer located in the mobile unit, in order to use measurements from the odometer to reduce position estimation error.

**18.** System according to any of claims 13-17, wherein said GPS/SBAS receiver (11) of the mobile unit (10) is a Galileo or GPS and Galileo combined receiver.

**19.** System according to any of claims 13-18, wherein it further provides the velocity coordinates of the mobile unit.

**20.** System according to claim 19, wherein for computation of integrity the system is configured to consider the velocity of the mobile user.

**21.** System according to any of claims 13-20, wherein information from different mobile units located in a certain restricted area are combined to cross-check the quality of the provided measurements.

**22.** System according to any of claims 13-21, wherein the computed position and protection levels is combined with external GIS information related to roads and streets, checked to ensure its integrity.

**23.** System according to claim 22, wherein said external information is related to the topography of the surface (3D information).

**24.** System according to any of claims 14-23, wherein said position coordinates of said mobile unit (10) together with said associated integrity guarantee information are encoded in a data packet (MUDP), stored in a non-volatile memory (15) of said mobile unit, which are transmitted to the central platform (20) at certain predefined intervals.

**25.** System according to any of claims 14-23, wherein said position coordinates of said mobile unit (10) together with said associated integrity guarantee information are encoded in a data packet (MUDP), stored in a non-volatile memory (15) of said mobile unit, which are transmitted to the central platform (20) upon request of the central platform.

**26.** System according to any of claims 14-23, wherein said position coordinates of said mobile unit (10) together with said associated integrity guarantee information are encoded in a data packet (MUDP), stored in a non-volatile memory (15) of said mobile unit, which are transmitted to the central platform (20) when a specific geographical condition happens.

**Patentansprüche**

**1.** Verfahren zum Bereitstellen einer Navigationspositionslösung eines Globalen Navigationssatellitensystems (GNSS) mit garantierter Integrität in nicht-kontrollierten Umgebungen, wobei eine nicht-kontrollierte Umgebung eine Umgebung ist, wo Annahmen eines *a priori* Messrauschmodells und einer einzelnen versagten Messung als schlechtester Fall beide nicht zutreffend sind, wobei die garantierte Integrität auf Schutzniveaus (protection levels) basiert, wobei das Verfahren umfasst:

- Verarbeiten eines Signals eines Globalen Navigationssatellitensystems (GNSS), um Trägerphase- und Pseudostreckenmessungen zu erhalten,
- Durchführen einer Vorverarbeitung dieser Messungen, um lokale Fehler in den Messungen nachzuweisen und zu charakterisieren, wobei die lokalen Fehler nicht *a priori* angenommen werden können, wobei die Charakterisierung das Bereitstellen von durch Auswerten der Trägerphase- und Pseudostreckenmessungen geschätzten Fehlergrenzen umfasst, und Bereitstellen eines Satzes Messablehnungen, wenn die Charakterisierung nicht möglich ist;
- Verwenden der geschätzten Fehlergrenzen, zusammen mit denen, die das Signal selbst bereits über Satelliten- und ionosphärische Fehler bereitstellt, um in jeder Messung ein geschätztes Rauschniveau in den Messungen als Eingabe zu einem gewichteten Empfängerautonomen-Integritätsprüfungs-(Receiver Autonomous Integrity Monitoring, RAIM)-Algorithmus zu erstellen, um Positionskoordinaten und assoziierte Schutzniveaus zu berechnen, basierend auf den Trägerphase- und Pseudostreckenmessungen.

**2.** Verfahren nach Anspruch 1, wobei der Nachweis und die Charakterisierung lokaler Fehler umfasst:

- Verwenden von herkömmlichen Trägerphasen-Schritt-Detektoren und Zyklusschlupf-Detektoren zusammen mit einem Trägerphasen-RAIM-Algorithmus für den Nachweis und den Ausschluss von Fehlern durch reflektierte Signale.

**3.** Verfahren nach einem der vorhergehenden Ansprüche, wobei der Nachweis und die Charakterisierung lokaler Fehler umfasst:

- Verwenden von verbesserten Pseudostreckenglättungstechnologien und Fehlervarianzschätzungen für den Nachweis und die Charakterisierung von Mehrwegfehlern.

**4.** Verfahren nach einem der vorhergehenden Ansprüche, wobei der gewichtete RAIM-Algorithmus die assoziierten Schutzniveaus basierend auf Echtzeitaktualisierungen der Pseudostreckengewichte unter Berücksichtigung der Charakterisierung von Messungen berechnet.

**5.** Verfahren nach einem der vorhergehenden Ansprüche, wobei der gewichtete RAIM-Algorithmus die assoziierten Schutzniveaus unter Berücksichtung der Möglichkeit mehrerer versagter Messungen berechnet.

**6.** Verfahren nach Anspruch 2, wobei der Trägerphasen-RAIM-Algorithmus mehrwegreflektierte Messungen auf Basis von Inkonsistenzen zwischen beobachtetem Doppler-Effekt und Geschwindigkeitsvektor ausschließt, um Nachweis und Ausschluss von mehrwegreflektierten Messungen sicherzustellen und, um Geschwindigkeit und assoziierte Schutzniveaus zu berechnen.

**7.** Verfahren nach einem der vorhergehenden Ansprüche, wobei ionosphärische Fehler basierend auf zwei Frequenzmessungen kompensiert werden.

**8.** Verfahren nach einem der vorhergehenden Ansprüche, wobei geglättete Pseudostrecken basierend auf einem Echtzeit-Filter berechnet werden.

**9.** Verfahren nach einem der vorhergehenden Ansprüche, wobei es die Verwendung eines Trägerphasen-RAIM-Algorithmus umfasst, basierend auf Inkonsistenzen zwischen dem beobachteten Doppler-Effekt in den akkumulierten Trägerphasenmessungen und dem Geschwindigkeitsvektor, um Nachweis und Ausschluss von mehrwegreflektierten Messungen sicherzustellen und um Geschwindigkeit und assoziierte Schutzniveaus zu berechnen, wobei der Algorithmus die klassische gewichtete RAIM-Formulierung für Pseudostrecken modifiziert, wobei für die Trägerphase der Messungsvektor Z, die Beobachtungsmatrix H, und die Messrauschmatrix R wie folgt redefiniert werden:

- der Messungsterm Z ist die Differenz zwischen der gemessenen und geschätzten akkumulierten Trägerphasenmessung:

$$\bar{Z} = \left\{ \begin{array}{c} \vdots \\ \Delta\widetilde{\Phi}^j - \Delta\hat{\Phi}^j \\ \vdots \end{array} \right\}$$

wobei die geschätzte akkumulierte Trägerphasenmessung

$$\Delta\hat{\Phi}^j = \left\{ \begin{array}{c} \hat{\rho}^{j\,-}_i(t)\Big|_{\Delta\bar{X}(t)=\bar{0}} - \hat{\rho}^j(t-\Delta t) + c(\widetilde{B}^-_i(t) - \widetilde{B}(t-\Delta t)) \\ - c(dt^j(t) - dt^j(t-\Delta t)) \\ + (T^j(t) - T^j(t-\Delta t)) - (I^j(t) - I^j(t-\Delta t)) \\ + CS(\Delta t) \end{array} \right.$$

ist,

wobei, für jeden der vorhergehenden t-Δt und laufenden t Zeiträume, $\hat{\rho}_i^{j-}$ die geschätzte Strecke von dem Empfänger zum Satelliten j ist; $c\tilde{B}$ ist der wahre Empfängeruhr-Bias; $cdt^j$ ist die Satellitenuhrverschiebung, berechnet mit der Sende-Ephemeride und verfügbaren Korrekturen; $I^j$ stellt den ionoshpärischen Effekt dar; $T^j$ ist die troposhpärische Verzögerung; und $CS(\Delta t)$ stellt den Zyklusschlupf-Effekt dar;
- jede Reihe hj der Beobachtungs- oder Informationsmatrix H ist, wie üblich, die partielle Ableitung der Messungsgleichung nach dem Zustandsvektor $\vec{X}$, neu berechnet, da die Messungen und der Zustandsvektor verschieden sind von dem klassischen Positions-RAIM mit Pseudostrecken:

$$h_j = \left[ \left.\frac{\partial(\Delta\Phi^j)}{\partial\vec{X}}\right|_{\vec{X}_i^-(t)}, \quad \left.\frac{\partial(\Delta\Phi^j)}{\partial(\Delta B)}\right|_{B_i^-(t)} \right] = \left[ -\frac{\vec{X}^j(t)^T - \vec{X}_i^-(t)}{\left|\vec{X}^j(t)^T - \vec{X}_i^-(t)\right|}, \quad 1 \right];$$

- jeder Term in der Messrauschmatrix R, dazu verwendet, die Gewichtungsmatrizen zu bilden, ist jetzt definiert durch das Rauschen der "a priori" nominalen akkumulierten Trägerphasenmessungen, welche durch die Differenz des Mehrwegs zwischen Zeiträumen dominiert werden, der so hoch wie ein Viertel einer Wellenlänge λ sein kann, da Zyklusschlupfe als in vorhergehenden Vorverarbeitungsschritten identifiziert angesehen werden und andere Terme eine vernachlässigbare Entwicklung entlang der Trägerphasenakkumulierungsperiode haben; deshalb kann der Wert des Rauschens einer jeden Trägerphasenmessung als

$$R_{jj} = \sigma_j = \frac{2}{3}\left(\lambda/4\right) = \frac{\lambda}{6}$$

berücksichtigt werden.

10. Verfahren nach einem der vorhergehenden Ansprüche, wobei es einen Algorithmus verwendet, der, basierend auf der Zeitkorrelation des Mehrwegfehlers, die lokalen Pseudostreckenfehler - Mehrweg und Empfängerrauschen - mittels assoziierter Varianz charakterisiert, wobei Messungen mit exzessiven Mehrwegfehlern für spätere Berechnungen ausgeschlossen werden und Mehrweg in validen Messungen abgeschwächt wird, der Algorithmus umfasst die folgenden Schritte:

- für jeden aktiven Satellit "i" berechne die Momentaufnahme der nicht ganzzahligen Trägerphasenambiguität $N_i(t_k)$, durch Vergleichen der iono-freien Pseudostrecke $\rho_{i,iono-frei}(t_k)$ und Trägerphasenmessungen $\Phi_{i,iono-frei}(t_k)$ für den laufenden Zeitraum:

$$N_i(t_k) = \rho_{i,iono-frei}(t_k) - \Phi_{i,iono-frei}(t_k)$$

- aktualisiere den Zwischenspeicher für Ambiguitäten durch Entfernen der ältesten, falls der Zwischenspeicher voll ist, und Hinzufügen der oben berechneten Ambiguität, wenn die Zahl der Ambiguitäten über einer bestimmten Mindestanzahl ($N_{min}$) liegt, kann der Filter die erwarteten Ausgaben bereitstellen;
- wenn der Nutzer im Initialisierungsmodus ist, berechne den Durchschnitt der gespeicherten Ambiguitäten ($\hat{N}_i(t_k)$) als

$$\tilde{N}_i(t_k) = \frac{1}{M} \sum_{l=0}^{M-1} N_i(t_{k-l})$$

und stelle die Kovarianz des Restfehlers der geglätteten Pseudostrecke ( $\sigma^2_{i,geglätted}(t_k)$ ) gleich dem a priori spezifizierten Wert $\sigma^2_{i,geglätted}(t_k) = \sigma^2_{0,Rauschen}$ ein;

- wenn die Nutzergeschwindigkeit größer wird als ein bestimmter Minimalwert ($V_{Nutzer,min}$) für wenigstens eine bestimmte minimale Zeit ($T_{min}$), berechne zuerst den Parameter F der den Gauss-Markov Prozess

$$N_i(t_k) = F_i \cdot N_i(t_{k-1}) + w_{i,k} \qquad w_{i,k} \in N\left(0, \sqrt{1 - F_i^2} \cdot \sigma_{i,Rauschen}\right)$$

definiert, welcher die Zeitkorrelation des Mehrwegfehlers modelliert, dann die geschätzte Ambiguität $\hat{N}_i(t_k)$, und schließlich die Kovarianz des Restfehlers der geglätteten Pseudostrecke $\sigma^2_{i,geglätted}(t_k)$ mittels eines gewichteten Mittelwertschemas wie folgt:

F wird mittels eines Kleinste-Quadrate-Schätzwerts geschätzt:

$$\tilde{F} = \left[A^T \cdot A\right]^{-1} \cdot A^T \cdot B$$

wobei

$$A = \begin{bmatrix} N_i(t_{k-M+1}) \\ N_i(t_{k-M+2}) \\ \cdots \\ N_i(t_{k-1}) \end{bmatrix} \quad B = \begin{bmatrix} N_i(t_{k-M+2}) \\ N_i(t_{k-M+3}) \\ \cdots \\ N_i(t_k) \end{bmatrix} \text{und} \quad B = A \cdot \tilde{F} \text{;}$$

dann wird die geschätzte Ambiguität mittels des gewichteten Mittelwerts wie folgt erhalten:

$$\tilde{N}_i(t_k) = \frac{N_i(t_k) + N_i(t_{k-M+1}) + (1 - \tilde{F}_i) \cdot \sum_{l=1}^{M-2} N_i(t_{k-l})}{M \cdot (1 - \tilde{F}_i) + 2 \cdot \tilde{F}_i}$$

und die Kovarianz des Restfehlers der geglätteten Pseudostrecke ist:

$$\sigma^2_{i,geglätted}(t_k) = \frac{\tilde{\sigma}^2_{i,Messrauschen}(t_k)}{IS_i(t_k)}$$

wobei die Rauschvarianz der gemessenen Ambiguität mittels einer Chi-Quadrat $\chi^2_{M-2,\%CL}$ Verteilung geschätzt wird, wobei M-2 Freiheitsgrade und ein gewünschtes Konfidenzniveau (CL) angenommen werden:

$$\tilde{\sigma}^2_{i,Messrauschen}(t_k) = \frac{1}{\left(1-\tilde{F}_i^2\right)\cdot\chi^2_{M-2,\%CL}} \cdot \sum_{j=0}^{M-2}\left(N_i(t_{k-j}) - \tilde{F}_i \cdot N_i(t_{k-j-1})\right)^2$$

und die äquivalente Zahl unabhängiger Proben (ISi(tk)) wird entsprechend geschätzt mittels des folgenden Ausdrucks:

$$IS_i(t_k) = \frac{M\cdot(1-F_i)+2\cdot F_i}{1+F_i} \quad ;$$

- wenn die Nutzergeschwindigkeit niedriger wird als der Minimalwert, wird die Ambiguität dann auf diejenige festgelegt, für die die Geschwindigkeit diesen Wert annahm (Zeitraum "tV min") :

$$\tilde{N}_i(t_k) = \tilde{N}_i(t_{V\min})$$

$$\sigma^2_{i,geglätted}(t_k) = \sigma^2_{i,geglätted}(t_{V\min})$$

während der Filter daran weiterarbeitet, den Bias **MBias$_i$(t$_k$)** zu schätzen, der durch den Mehrweg hervorgerufen wird, als Differenz zwischen dem Durchschnitt der Ambiguität und der festgelegten Referenzambiguität:

$$\tilde{N}_{i,biased}(t_k) = \frac{\sum_{l=0}^{M-1}N_i(t_{k-l})}{M}$$

$$S^2_{i,biased}(t_k) = \frac{\sum_{l=0}^{M-1}\left(N_i(t_{k-l}) - \tilde{N}_{i,biased}(t_k)\right)^2}{M}$$

$$\sigma^2_{i,biased}(t_k) = \frac{1}{M-1}\cdot\left(S_{i,biased}(t_k)\cdot\frac{t_{M-1,md}}{K_{N,md}}\right)^2$$

$$MBias_i(t_k) = \tilde{N}_i(t_{V\min}) - \tilde{N}_{i,biased}(t_k)$$

$$\sigma^2_{i,MBias}(t_k) = \sigma^2_{i,biased}(t_k) + \sigma^2_{i,geglättet}(t_{V\,min})$$

mit $t_{M-1,md}$ als der Punkt der t-Student-Verteilung mit "M-1" Freiheitsgraden, der in den Ausläufern (Zwei-Ausläufer Problem) eine Wahrscheinlichkeit gleich der dem gesamten RAIM-Algorithmus zugewiesenen Verpassten-NachweisWahrscheinlichkeit (missed detection probability, md) belässt und $K_{N,md}$ der Punkt der GaussVerteilung, Mittelwert Null und Varianz gleich 1, der in den Ausläufern (Zwei-Ausläufer) Problem eine Wahrscheinlichkeit gleich der dem gesamten RAIM-Algorithmus zugewiesenen Verpassten-Nachweis-Wahrscheinlichkeit (missed detection probability, md) belässt;

- falls ein Zyklusschlupf auftritt, wird der Glättungsfilter zurückgesetzt und der Zwischenspeicher für gespeicherte Momentaufnahme-Ambiguitäten wird gelöscht; eine neue Ausgabe wird bereitgestellt, wenn die Zahl der neuen gespeicherten Ambiguitäten ein Minimum erreicht und zusätzlich, falls die Nutzergeschwindigkeit unterhalb des Minimums ist, wird die erste neue verfälschte (biased) Ambiguität mit dem letzten berechneten Bias korrigiert und dann wird sie festgelegt:

$$\tilde{N}_i(t_{nach\,Zyklusschlupf}) = \tilde{N}_{i,biased}(t_{i,Zyklusschlupf} + \Delta t_{min}) + MBias_i(t_{i,Zyklusschlupf} - 1)$$

$$\sigma^2_{i,geglättet}(t_{nach\,Zyklusschlupf}) = \sigma^2_{i,biased}(t_{i,Zyklusschlupf} + \Delta t_{min}) + \sigma^2_{i,MBias}(t_{i,Zyklusschlupf} - 1)$$

und so lange, wie die Zeit voranschreitet, wird der Bias nach dem gleichen Ansatz wie vorher geschätzt, um sich gegen neue Zyklusschlupfe zu wehren;

- falls die Nutzergeschwindigkeit wieder größer wird als der Minimalwert ($V_{Nutzer,min}$) für wenigstens die minimale Zeit ($T_{min}$), ersetzt die Filterausgabe die vorherige, wobei die iono-freie geglättete Pseudostrecke berechnet wird als:

$$\tilde{\rho}_{i,iono-frei}(t_k) = \tilde{N}_i(t_k) + \Phi_{i,iono-frei}(t_k)$$

wobei $\hat{\hat{N}}_i(t_k)$ die geschätzte Ambiguität ist, $\Phi_{i,iono-frei}(t_k)$ ist die iono-freie Trägerphasenmessung für den laufenden Zeitraum;

und mit der assoziierten Kovarianz des Restfehlers der geglätteten Pseudostrecke $\sigma^2_{i,geglättet}(t_k)$ berechnet wie oben definiert.

11. Verfahren nach einem der vorhergehenden Ansprüche, wobei, um die Gewichte der Pseudostreckenfehler zu berechnen, die Varianz des Rauschens einer jeden Pseudostrecke i gemäß den Gleichungen in den Minimalbetriebsstandards (Minimum Operations Performance Standards, MOPS) berechnet wird, wobei der Mehrwegterm mit der Charakterisierung aus der Pseudostreckenglättung und Fehlervarianzschätzung $\sigma^2_{i,Mehrweg} = \sigma^2_{i,geglättet}(t_k)$ aktualisiert wird:

$$\sigma^2_i = \sigma^2_{i,fit} + \sigma^2_{i,UIRE} + \sigma^2_{i,Luft} + \sigma^2_{i,tropo}$$

$$\sigma^2_{i,Luft} = \sigma^2_{i,Rauschen} + \sigma^2_{i,Mehrweg} + \sigma^2_{i,divg}$$

und die Gewichtsmatrix W wird wie folgt gebildet:

$$W^{-1} = \begin{vmatrix} \sigma_1^2 & 0 & \cdots & 0 \\ 0 & \sigma_2^2 & \cdots & 0 \\ \vdots & \vdots & \ddots & \vdots \\ 0 & 0 & \cdots & \sigma_N^2 \end{vmatrix}.$$

**12.** Verfahren nach einem der vorhergehenden Ansprüche, wobei es einen Algorithmus für die Berechnung des Schutzniveaus basierend auf gewichteten RAIM für einen Mehrfachversagenfall verwendet, wobei der Algorithmus die folgende Gleichung verwendet:

$$PL = \max\{SLOPE\} \times \gamma_{norm}(P_{FA}) + k_n(P_{MD}) \sqrt{\sum_{i=j_1}^{i=j_2} \left[ \left( H^T PH \right)^{-1} \right]_{ii}}$$

wobei:

PL das Schutzniveau für die Zustandsvektorkoordinaten ist, die zu schützen von Interesse ist,

Max{SLOPE} die schlechteste Beziehung zwischen dem Fehler in den Zustandsvektorkoordinaten von Interesse und der Chi-Quadrat $\chi^2$ Teststatistik $\rho$ ist,

$\gamma_{norm}(P_{FA})$ die Schwelle des RAIM-Ausfall-Nachweis-Tests für eine gegebene Fehlalarmwahrscheinlichkeit PFA ist,

$k_n(P_{MD})$ die Zahl der Standardabweichungen in einer n-Dimensionen (diejenigen der Zustandsvektorkoordinaten, die zu schützen von Interesse ist) Gaussverteilung ist, die eine Wahrscheinlichkeit entsprechend der spezifizierten Wahrscheinlichkeit einer Fehldetektion PMD ausließ,

H die Beobachtungsmatrix ist,

P die Korrelations- und Gewichtsmatrix zwischen den Messungen ist;

wobei Max{SLOPE} erhalten wird, durch Maximieren des Fehlers in dem Satz von Elementen des Zustandsvektors aufgrund des mehrfachen Messversagens, das zu einer Zunahme in der Chi-Quadrat Teststatistik zu Messresiduen, um Fehler zu detektieren, führt; wobei in die Berechnung dieser Maximierung zusätzliche Beschränkungen (gehandhabt mit Lagrange mathematischen Techniken) gegenüber der klassischen Formulierung eingeführt werden:

- eine Beschränkung bestehend darin, dass das Mehrfachversagen zu einem konstanten Wert des Chi-Quadrat Tests führt,
- und eine zweite Beschränkung bestehend im Definieren des Versagensmodus, so dass von all den möglichen Kombinationen der Satelliten nur die Kombinationen einer gegebenen Zahl M der Satelliten erlaubt sind; deshalb ist der Wert, welcher für Max{SLOPE} erhalten wird:

$$\max\{SLOPE\} = \sqrt{\lambda_{1_{MAX}}} = \sqrt{(N-m)\lambda_{MAX}}$$

wobei $\lambda_{MAX}$ der maximale Eigenwert ist, entsprechend einem Vektor $\vec{e}_{MAX}$, der eine der Lösungen zum generalisierten Eigenwert-Problem:

$$\left( V^T A_{SUB(j_1,\cdots j_2)}^T A_{SUB(j_1,\cdots j_2)} V - \lambda V^T S V \right) \vec{e} = \vec{0}$$

ist,
wobei:

V einen Teilraum der zu testenden Versagensmodi darstellt (Das Konzept des "Versagensmodus" betrachtet eine Teilmenge der Messfehlervektoren $\vec{b}$, gehörend zu einem Unterraum der zu testenden Versagensmodi, so dass jeder Fehlervektor $\vec{b}$ gebildet werden kann aus einer Familie von Versagensmodi V, generiert aus den Einheitsvektoren $\vec{e}_i$ in dem Messraum durch:

$$\vec{b} = V\vec{e} = \left\{\vec{v}_1, \cdots \vec{v}_M\right\}\vec{e}_M$$

und so, mit M Messungen, sind die einzelnen Versager durch M Fälle von eindimensionalen Unterräumen repräsentiert, und für mehrere Versager von $n_F$ Messungen, müssen alle Kombinationen von M Messungen in Gruppen von $n_F$ repräsentiert durch

$$V_{SUB(j_1, \cdots j_{n_F})} = \begin{bmatrix} \vec{0} & \vec{0} \\ 1_{j_1} & \vdots \\ \vdots & \cdots & \vdots \\ \vdots & 1_{j_{n_F}} \\ \vec{0} & \vec{0} \end{bmatrix}_{M, n_F}$$

berücksichtigt werden

$A_{SUB(j_1, \cdots j_2)}$ ist die Untermatrix der pseudoinversen Matrix $H^* = (H^T P H)^{-1} H^T P$, der Kleinsten-Quadrate-Lösung $x = H^* \tilde{Z}$ des Zustandsvektors, mit den Reihen $j$ entsprechend den Zustandsvektorkoordinaten von Interesse:

$$A_{SUB(j_1, \cdots j_2)} = \begin{bmatrix} \vec{0} \\ H^\bullet_{j_1} \\ \vdots \\ H^\bullet_{j_2} \\ \vec{0} \end{bmatrix}$$

mit P der Korrelations- und Gewichtsmatrix zwischen den Messungen

$$S = I - HH^*$$

und

13. Ein System zur Bereitstellung einer GNSS Navigationspositionslösung wenigstens einer mobilen Einheit mit garantierter Integrität in nicht-kontrollierten Umgebungen, wobei eine nicht-kontrollierte Umgebung eine Umgebung ist, wo Annahmen eines *a priori* Messrauschmodells und einer einzelnen versagten Messung als schlechtester Fall beide nicht zutreffend sind; wobei die garantierte Integrität auf Schutzniveaus (protection levels) basiert, wobei die wenigstens eine mobile Einheit (10) umfasst:

- einen GPS/SBAS Empfänger (11) zum Empfangen eines Signals (1) eines Globalen Navigationssatellitensystems (GNSS),
- Mittel zum Verarbeiten des GNSS-Signals, um Trägerphase- und Pseudostreckenmessungen zu erhalten,
- Mittel, zum Durchführen einer Vorverarbeitung der Messungen, um lokale Fehler in den Messungen nachzuweisen und zu charakterisieren, wobei die Charakterisierung das Bereitstellen von Fehlergrenzen, geschätzt durch Auswerten der Trägerphase- und Pseudostreckenmessungen, beinhaltet, und Bereitstellen eines Satzes Messablehnungen, wenn die Charakterisierung nicht möglich ist,
- Mittel zum Verwenden der Fehlergrenzen, zusammen mit denen, die das Signal selbst bereits über Satelliten- und ionosphärische Fehler bereitstellt, um in jeder Messung ein geschätztes Rauschniveau in den Messungen zu erstellen als Eingabe zu einem gewichteten Empfängerautonomen-Integritätsprüfungs-(Receiver Autonomous Integrity Monitoring, RAIM)-Algorithmus, um Positionskoordinaten und assoziierte Schutzniveaus zu berechnen, basierend auf den Trägerphase- und Pseudostreckenmessungen.

**14.** System nach Anspruch 13, wobei die mobile Einheit (10) ferner einen drahtlosen Telekommunikationsdatensendeempfänger (13) umfasst, angeordnet, um die berechneten Positionskoordinaten und assoziierten Schutzniveaus zu einer zentralen Plattform (20) zu senden, die dazu angeordnet ist, um wenigstens einem autorisierten Nutzer (30) die Positionskoordinaten der mobilen Einheit (20) zusammen mit einer assoziierten Integritätsgarantieinformation zur Verfügung zu stellen.

**15.** System nach einem der Ansprüche 13-14, wobei die mobile Einheit (10) Schnittstellen zu anderen externen Geräten aufweist.

**16.** System nach einem der Ansprüche 13-15, wobei die mobile Einheit (10) eine Schnittstelle aufweist zu einem Wegmesser, angeordnet in der mobilen Einheit, um Messungen des Wegmessers dazu zu verwenden, Positionsschätzungen während GPS- und/oder Galileo-Ausfällen zu erhalten.

**17.** System nach einem der Ansprüche 13-16, wobei die mobile Einheit (10) eine Schnittstelle aufweist zu einem Wegmesser, angeordnet in der mobilen Einheit, um Messungen des Wegmessers dazu zu verwenden, Positionsschätzfehler zu reduzieren.

**18.** System nach einem der Ansprüche 13-17, wobei der GPS/SBAS Empfänger (11) der mobilen Einheit (10) ein Galileo oder GPS und Galileo kombinierter Empfänger ist.

**19.** System nach einem der Ansprüche 13-18, wobei es ferner die Geschwindigkeitskoordinaten der mobilen Einheit bereitstellt.

**20.** System nach Anspruch 19, wobei für die Integritätsberechnung das System dazu konfiguriert ist, die Geschwindigkeit des mobilen Nutzers zu berücksichtigen.

**21.** System nach einem der Ansprüche 13-20, wobei Informationen von verschiedenen mobilen Einheiten, die in einer bestimmten beschränkten Bereich angeordnet sind, kombiniert werden, um die Qualität der bereitgestellten Messungen zu überprüfen.

**22.** System nach einem der Ansprüche 13-21, wobei die berechnete Position und Schutzniveaus kombiniert werden mit externer GIS Information bezüglich Wegen und Straßen, geprüft, um ihre Integrität sicherzustellen.

**23.** System nach Anspruch 22, wobei die externe Information sich auf die Oberflächentopographie (3D Informationen) bezieht.

**24.** System nach einem der Ansprüche 14-23, wobei die Positionskoordinaten der mobilen Einheit (10) zusammen mit der assoziierten Integritätsgarantieinformation in einem Datenpaket (MUDP) kodiert sind, gespeichert in einem nicht-flüchtigen Speicher (15) der mobilen Einheit, die in bestimmten vorgegebenen Intervallen an die zentrale Plattform (20) übermittelt werden.

**25.** System nach einem der Ansprüche 14-23, wobei die Positionskoordinaten der mobilen Einheit (10) zusammen mit der assoziierten Integritätsgarantieinformation in einem Datenpaket (MUDP) kodiert sind, gespeichert in einem nicht-flüchtigen Speicher (15) der mobilen Einheit, die auf Anfrage der zentralen Plattform an die zentrale Plattform (20) übermittelt werden.

**26.** System nach einem der Ansprüche 14-23, wobei die Positionskoordinaten der mobilen Einheit (10) zusammen mit der assoziierten Integritätsgarantieinformation in einem Datenpaket (MUDP) kodiert sind, gespeichert in einem nicht-flüchtigen Speicher (15) der mobilen Einheit, die an die zentrale Plattform (20) übermittelt werden, wenn eine bestimmte geographische Bedingung eintritt.

**Revendications**

**1.** Procédé pour fournir une solution de position de navigation de système mondial de navigation par satellite (GNSS) avec une intégrité garantie dans des environnements non contrôlés, un environnement non contrôlé étant un environnement où des hypothèses d'un modèle de bruit de mesures a priori et d'une unique mesure défaillante comme le pire des cas ne sont pas tous deux applicables, ladite intégrité garantie étant basée sur des niveaux de protection ; le procédé comprend :

- le traitement d'un signal de système mondial de navigation par satellite (GNSS) pour obtenir des mesures de pseudo-distances et de phase des porteuses,
- l'exécution d'un prétraitement desdites mesures de manière à détecter et caractériser des erreurs locales dans lesdites mesures, lesquelles erreurs locales ne peuvent pas être supposées a priori, ladite caractérisation comprenant la fourniture de limites d'erreur estimées en évaluant lesdites mesures de pseudo-distances et de phase des porteuses, et la fourniture d'un ensemble de rejets de mesures quand ladite caractérisation n'est pas possible ;
- l'utilisation desdites limites d'erreur estimées, conjointement à celles déjà fournies par le signal lui-même concernant des erreurs de satellite et ionosphériques, pour construire dans chaque mesure un niveau de bruit estimé dans lesdites mesures comme entrée pour un algorithme de surveillance autonome de l'intégrité de récepteur (RAIM) pondéré de manière à calculer des coordonnées de position et des niveaux de protection associés, sur la base desdites mesures de pseudo-distances et de phase des porteuses.

**2.** Procédé selon la revendication 1, dans lequel ladite détection et caractérisation d'erreurs locales comprend :

- l'utilisation de détecteurs d'échelon de phase de porteuses et de détecteurs de glissement de cycle traditionnels conjointement à l'algorithme RAIM de phase de porteuses, pour la détection et le rejet d'erreurs de signal réfléchi.

**3.** Procédé selon une quelconque revendication précédente, dans lequel ladite détection et caractérisation d'erreurs locales comprend :

- l'utilisation de technologies améliorées de lissage de pseudo-distances et d'une estimation de variance des erreurs, pour la détection et la caractérisation d'erreurs de trajets multiples.

**4.** Procédé selon une quelconque revendication précédente, dans lequel ledit algorithme RAIM pondéré calcule les niveaux de protection associés sur la base d'actualisations de poids de pseudo-distances en temps réel prenant en considération ladite caractérisation de mesures.

**5.** Procédé selon une quelconque revendication précédente, dans lequel ledit algorithme RAIM pondéré calcule les niveaux de protection associés en considérant la possibilité de mesures manquées multiples.

**6.** Procédé selon la revendication 2, dans lequel ledit algorithme RAIM de phase de porteuses exclut des mesures réfléchies de trajets multiples sur la base d'incohérences entre effet Doppler observé et vecteur vitesse, de manière à garantir une détection et une exclusion de mesures réfléchies de trajets multiples et calculer une vitesse et des niveaux de protection associés.

**7.** Procédé selon une quelconque revendication précédente, dans lequel lesdites erreurs ionosphériques sont compensées sur la base de deux mesures de fréquence.

8. Procédé selon une quelconque revendication précédente, dans lequel des pseudo-distances lissées sont calculées sur la base d'un filtre en temps réel.

9. Procédé selon une quelconque revendication précédente, dans lequel il comprend l'utilisation d'un algorithme RAIM de phase de porteuses, basé sur des incohérences entre l'effet Doppler observé dans les mesures de phase de porteuses accumulées et le vecteur vitesse, de manière à garantir une détection et une exclusion de mesures réfléchies de trajets multiples et calculer une vitesse et des niveaux de protection associés, ledit algorithme modifie la formulation RAIM pondérée classique pour pseudo-distances, en redéfinissant pour la phase de porteuses le vecteur de mesures Z, la matrice d'observation H et la matrice de bruit de mesures R comme suit :

- le terme de mesure Z est la différence entre la mesure de phase de porteuses accumulée mesurée et estimée :

$$\vec{Z} = \left\{ \begin{matrix} \vdots \\ \Delta\widetilde{\Phi}^{j} - \Delta\hat{\Phi}^{j} \\ \vdots \end{matrix} \right\}$$

où la mesure de phase de porteuses accumulée estimée est :

$$\Delta\hat{\Phi}^{j} = \left\{ \begin{matrix} \hat{\rho}^{j^{-}}_{i}(t)\Big|_{\Delta\tilde{X}(t)=\delta} - \hat{\rho}^{j}(t-\Delta t) + c(\widetilde{B}^{-}_{i}(t) - \widetilde{B}(t-\Delta t)) \\ - c(dt^{j}(t) - dt^{j}(t-\Delta t)) \\ + (T^{j}(t) - T^{j}(t-\Delta t)) - (I^{j}(t) - I^{j}(t-\Delta t)) \\ + CS(\Delta t) \end{matrix} \right.$$

où, pour chaque époque t-Δt précédente et t actuelle, $\hat{\rho}^{j^{-}}_{i}$ est la distance estimée du récepteur au satellite j ; $c\hat{B}$ est la polarisation d'horloge vraie du récepteur ; $cdt^{i}$ est le décalage d'horloge du satellite, calculée avec les éphémérides diffusées et les corrections disponibles ; $I^{i}$ représente l'effet ionosphérique ; $T^{i}$ est le retard troposphérique ; et CS(ΔT) représente l'effet de glissement de cycle ;

- chaque ligne hj de la matrice d'observation ou d'information H est, comme d'habitude, la dérivée partielle de l'équation de mesure par rapport au vecteur d'état $\vec{X}$, recalculé lorsque les mesures et le vecteur d'état sont différents par rapport au RAIM de positionnement classique avec pseudo-distances :

$$h_{j} = \left[ \frac{\partial\left(\Delta\Phi^{j}\right)}{\partial\vec{X}}\Big|_{\vec{X}^{-}_{i}(t)}, \frac{\partial\left(\Delta\Phi^{j}\right)}{\partial(\Delta B)}\Big|_{B^{-}_{i}(t)} \right] = \left[ -\frac{\vec{X}^{j}(t)^{T} - \vec{X}^{-}_{i}(t)}{\left|\vec{X}^{j}(t)^{T} - \vec{X}^{-}_{i}(t)\right|}, 1 \right]$$

- chaque terme dans la matrice de bruit de mesure R, utilisée pour construire les matrices de poids, est maintenant défini par le bruit de la mesure de phase de porteuses accumulée nominale « a priori », qui sont dominées par la différence de trajets multiples entre des époques qui peut être aussi élevée qu'un quart de longueur d'onde λ, lorsque des glissements de cycle sont considérés comme identifiés dans des étapes de prétraitement précédentes et d'autres termes ont une évolution négligeable le long de la période d'accumulation de phase de porteuses ; par conséquent, la valeur du bruit de chaque mesure de phase de porteuses peut être considérée comme :

$$R_{ji} = \sigma_{j} = \frac{2}{3}\left(\lambda/4\right) = \frac{\lambda}{6}.$$

**10.** Procédé selon une quelconque revendication précédente, dans lequel il utilise un algorithme qui, sur la base de la corrélation temporelle de l'erreur de trajets multiples, caractérise les erreurs locales de pseudo-distance - trajets multiples et bruit de récepteur - en termes de variance associée, dans lequel des mesures avec des erreurs de trajets multiples excessives sont exclues pour des calculs successifs et un trajet multiple est atténué dans des mesures valables, l'algorithme comprend les étapes suivantes :

- pour chaque satellite actif « i », le calcul de l'ambiguïté non entière de phase de porteuses instantanée $N_i(t_k)$, en comparant les mesures sans ionosphère de pseudo-distance $\rho_{i,iono\text{-}free}(t_k)$ et de phase de porteuse ($\Phi_{i,iono\text{-}free}(t_k)$) pour l'époque actuelle :

$$N_i(t_k) = \rho_{i,iono\text{-}free}(t_k) - \Phi_{i,iono\text{-}free}(t_k)$$

- la mise à jour la mémoire tampon d'ambigüités en éliminant la plus ancienne, si la mémoire tampon est pleine, et l'ajout de l'ambigüité calculée ci-dessus, si le nombre d'ambigüités est supérieur à un certain nombre minimum ($N_{min}$), le filtre peut délivrer les sorties prévues ;
- si l'utilisateur est dans un mode d'initialisation, le calcul de la moyenne des ambigüités stockées ($\tilde{N}_i(t_k)$) comme

$$\tilde{N}_i(t_k) = \frac{1}{M}\sum_{l=0}^{M-1} N_i(t_{k-l})$$

et la détermination de la covariance de l'erreur résiduelle de la pseudo-distance lissée $\left(\sigma^2_{i,smoothed}(t_k)\right)$ égale à la valeur spécifiée a priori

$$\sigma^2_{i,smoothed}(t_k) = \sigma^2_{0,noise};$$

- si la vitesse de l'utilisateur devient supérieure à une certaine valeur minimale ($V_{user,min}$) pendant au moins un certain temps minimum ($T_{min}$), le calcul d'abord du paramètre F qui définit le processus de Gauss-Markov

$$N_i(t_k) = F_i \cdot N_i(t_{k-1}) + w_{i,k} \quad w_{i,k} \in N\left(0, \sqrt{1 - F_i^2} \cdot \sigma_{i,noise}\right),$$

qui modélise la corrélation temporelle de l'erreur de trajets multiples, ensuite l'ambigüité estimée $\tilde{N}_i(t_k)$ et enfin la covariance de l'erreur résiduelle de la pseudo-distance lissée $\sigma^2_{i,smoothed}(t_k)$ au moyen d'un schéma de moyenne pondérée comme suit :

F est estimé au moyen d'un estimateur des moindres carrés :

$$\widetilde{F} = \left[A^T \cdot A\right]^{-1} \cdot A^T \cdot B$$

où :

$$A = \begin{bmatrix} N_i(t_{k-M+1}) \\ N_i(t_{k-M+2}) \\ \cdots \\ N_i(t_{k-1}) \end{bmatrix} \quad B = \begin{bmatrix} N_i(t_{k-M+2}) \\ N_i(t_{k-M+3}) \\ \cdots \\ N_i(t_k) \end{bmatrix} \quad \text{et} \quad B = A \cdot \widetilde{F} \quad ;$$

ensuite l'ambigüité estimée est obtenue par le biais de la moyenne pondérée comme suit :

$$\widetilde{N}_i(t_k) = \frac{N_i(t_k) + N_i(t_{k-M+1}) + (1 - \widetilde{F}_i) \cdot \sum_{i=1}^{M-2} N_i(t_{k-l})}{M \cdot (1 - \widetilde{F}_i) + 2 \cdot \widetilde{F}_i}$$

et la covariance de l'erreur résiduelle de la pseudo-distance lissée est :

$$\sigma_{i,smoothed}^2(t_k) = \frac{\widetilde{\sigma}_{i,measurement\ noise}^2(t_k)}{IS_i(t_k)}$$

où la variance de bruit de l'ambigüité mesurée est estimée au moyen d'une distribution chi carré $X^2_{M-2\%CL}$ en supposant M-2 degrés de liberté et un niveau de confiance nécessaire (CL) :

$$\widetilde{\sigma}_{i,measurement\ noise}^2(t_k) = \frac{1}{\left(1 - \widetilde{F}_i^2\right) \cdot \chi_{M-2,\%CL}^2} \cdot \sum_{j=0}^{M-2} \left(N_i(t_{k-j}) - \widetilde{F}_i \cdot N_i(t_{k-j-1})\right)^2$$

et le nombre équivalent d'échantillons indépendants (ISi(tk)) est estimé en conséquence à l'aide de l'expression suivante :

$$IS_i(t_k) = \frac{M \cdot (1 - F_i) + 2 \cdot F_i}{1 + F_i} \quad ;$$

- si la vitesse de l'utilisateur devient inférieure à la valeur minimale, alors l'ambigüité est fixée à celle pour laquelle la vitesse prend cette valeur (époque « tV min ») :

$$\tilde{N}_i(t_k) = \tilde{N}_i(t_{V\,\min})$$

$$\sigma^2_{i,smoothed}(t_k) = \sigma^2_{i,smoothed}(t_{V\,\min})$$

alors que le filtre continue de travailler en estimant la polarisation $MBias_i(t_k)$ provoquée par le trajet multiple comme la différence entre la moyenne de l'ambigüité et l'ambigüité fixée de référence :

$$\tilde{N}_{i,biased}(t_k) = \frac{\sum_{l=0}^{M-1} N_i(t_{k-l})}{M}$$

$$S^2_{i,biased}(t_k) = \frac{\sum_{l=0}^{M-1}\left(N_i(t_{k-l}) - \tilde{N}_{i,biased}(t_k)\right)^2}{M}$$

$$\sigma^2_{i,biased}(t_k) = \frac{1}{M-1}\cdot\left(S_{i,biased}(t_k)\cdot\frac{t_{M-1,md}}{K_{N,md}}\right)^2$$

$$MBias_i(t_k) = \tilde{N}_i(t_{V\,\min}) - \tilde{N}_{i,biased}(t_k)$$

$$\sigma^2_{i,MBias}(t_k) = \sigma^2_{i,biased}(t_k) + \sigma^2_{i,smoothed}(t_{V\,\min})$$

avec $t_{M-1,md}$ le point de la distribution de t-Student avec « M-1 » degrés de liberté qui laisse dans les queues (problème à deux queues) une probabilité égale à la probabilité de détection manquée (md) attribuée à l'algorithme RAIM complet et étant $K_{N,md}$ le point de la distribution de Gauss, moyenne nulle et variance égale à 1, qui laisse dans les queues (problème à deux queues) une probabilité égale à la probabilité de détection manquée attribuée à l'algorithme RAIM complet ;
- s'il existe un glissement de cycle, le filtre de lissage est réinitialisé et la mémoire tampon d'ambigüités instantanées stockées est effacée ; une nouvelle sortie est délivrée quand le nombre de nouvelles ambigüités stockées atteint un minimum et en plus, si la vitesse de l'utilisateur est inférieure au minimum, la première nouvelle ambigüité polarisée est corrigée avec la plus récente polarisation calculée et il est ensuite fixé :

$$\tilde{N}_i(t_{after\,cycle\,slip}) = \tilde{N}_{i,biased}(t_{i,cycle\,slip} + \Delta t_{\min}) + MBias_i(t_{i,cycle\,slip} - 1)$$

$$\sigma_{i,smoothed}^{2}(t_{after\ cycle\ slip}) = \sigma_{i,biased}^{2}(t_{i,cycle\ slip} + \Delta t_{min}) + \sigma_{i,MBias}^{2}(t_{i,cycle\ slip} - 1)$$

et aussi longtemps que le temps s'écoule, la polarisation est estimée en suivant la même approche qu'avant, pour réagir contre de nouveaux glissements de cycle ;

- si la vitesse de l'utilisateur devient à nouveau supérieure à la valeur minimale ($V_{user,min}$) pendant au moins le temps minimum ($T_{min}$), la sortie de filtre remplace la précédente en calculant la pseudo-distance lissée sans ionosphère comme :

$$\tilde{\rho}_{i,iono-free}(t_k) = \tilde{N}_i(t_k) + \Phi_{i,iono-free}(t_k)$$

où

$\tilde{N}_i(t_k)$ est l'ambigüité estimée, ($\Phi_{i,iono-free}(t_k)$) est la mesure de phase de porteuses sans ionosphère pour l'époque actuelle ;

et avec la covariance associée de l'erreur résiduelle de la pseudo-distance lissée $\sigma_{i,smoothed}^{2}(t_k)$ calculée comme défini ci-dessus.

**11.** Procédé selon une quelconque revendication précédente, dans lequel, de manière à calculer les poids des erreurs de pseudo-distance, la variance du bruit de chaque pseudo-distance i est calculée selon les équations dans les standards de performance de fonctionnement minimale (MOPS) en actualisant le terme de trajets multiples avec la caractérisation à partir du lissage de pseudo-distance et de l'estimation de variance des erreurs $\sigma_{i,multipath}^{2} = \sigma_{i,smoothed}^{2}(t_k)$ :

$$\sigma_i^2 = \sigma_{i,fit}^2 + \sigma_{i,UIRE}^2 + \sigma_{i,air}^2 + \sigma_{i,tropo}^2$$

$$\sigma_{i,air}^2 = \sigma_{i,noise}^2 + \sigma_{i,multipath}^2 + \sigma_{i,divg}^2$$

et la matrice de poids W est construite comme :

$$W^{-1} = \begin{bmatrix} \sigma_1^2 & 0 & \cdots & 0 \\ 0 & \sigma_2^2 & \cdots & 0 \\ \vdots & \vdots & \ddots & \vdots \\ 0 & 0 & \cdots & \sigma_N^2 \end{bmatrix}$$

**12.** Procédé selon une quelconque revendication précédente, dans lequel il utilise un algorithme pour le calcul du niveau de protection basé sur RAIM pondéré pour cas de défaillance multiple, ledit algorithme utilise l'équation suivante :

$$PL = \max\{SLOPE\} \times \gamma_{norm}(P_{FA}) + k_n(P_{MD})\sqrt{\sum_{i=j_1}^{i=j_2}\left[(H^T PH)^{-1}\right]_i}$$

où :

PL est le niveau de protection pour les coordonnées de vecteur d'état d'intérêt à protéger,

Max{SLOPE} est la pire relation entre l'erreur dans les coordonnées de vecteur d'état d'intérêt et la statistique $\rho$ de test du chi-carré $\chi^2$,

$\gamma_{norm}(P_{FA})$ est le seuil du test de détection de défaillance RAIM, pour une probabilité de fausse alarme donnée PFA,

$k_n(P_{MD})$ est le nombre d'écarts type dans une distribution gaussienne à n dimensions (celles des coordonnées de vecteur d'état d'intérêt à protéger) qui laisse de côté une probabilité correspondant à la probabilité spécifiée de détection manquée PMD,

H est la matrice d'observation,

P est la matrice de corrélation et de poids entre les mesures ;

dans lequel Max{SLOPE} est obtenue en maximisant l'erreur dans l'ensemble d'éléments du vecteur d'état à cause de la défaillance de mesure multiple qui donne lieu à une augmentation dans la statistique de test du chi carré sur des mesures résiduelles pour détecter des défaillances ; en introduisant dans le calcul de cette maximisation des contraintes additionnelles (générées avec des techniques mathématiques de Lagrange) sur la formulation classique :

- une contrainte consistant en ce que la défaillance multiple donne une valeur constante du test du chi carré,
- et une deuxième contrainte consistant à définir le mode de défaillance de manière que, parmi toutes les combinaisons de satellites possibles, seules les combinaisons de n'importe quel nombre donné M de satellites soient permises ;

par conséquent, la valeur obtenue pour Max{SLOPE} est :

$$\max\{SLOPE\} = \sqrt{\lambda_{1_{MAX}}} = \sqrt{(N-m)\lambda_{MAX}}$$

où $\lambda$MAX est la valeur propre maximale, correspondant à un vecteur $\vec{e}_{MAX}$, qui est une des solutions au problème de valeur propre généralisée :

$$\left(V^T A^T_{SUB(j_1,\cdots j_2)} A_{SUB(j_1,\cdots j_2)} V - \lambda V^T SV\right)\vec{e} = \vec{0}$$

où :

V représente un sous-espace de modes de défaillance en test (le concept du « mode de défaillance » considère un sous-ensemble de vecteurs d'erreur de mesures $\vec{b}$ appartenant à un sous-espace de modes de défaillance en test de manière que n'importe quel vecteur d'erreur $\vec{b}$ puisse être construit à partir d'une famille de modes de défaillance V générée à partir des vecteurs unitaires $\vec{e}_i$ dans l'espace de mesure par :

$$\vec{b} = \sqrt{e} = \{\vec{v}_1, \dots \vec{v}_M\}\vec{e}_M$$

et ainsi, avec M mesures, les défaillances individuelles sont représentées par M cas de sous-espaces à une dimension, et pour des défaillances multiples de $n_F$ mesures, il faudra considérer toutes les combinaisons de M mesures en groupes de $n_F$ représentées par

$$V_{SUB(j_1, \dots j_{n_F})} = \begin{vmatrix} \bar{0} & \bar{0} \\ 1_{j_1} & \vdots \\ \vdots & \cdots & \vdots \\ \vdots & 1_{j_{n_F}} \\ \bar{0} & \bar{0} \end{vmatrix}_{M, n_F}$$

$A_{SUB(j_1, \dots j_2)}$ est la sous-matrice de la matrice pseudo-inverse H* - $(H^T PH)^{-1} H^T P$ de la solution des moindres carrés de vecteur d'état $\hat{x} = H^*\tilde{Z}$, avec les lignes j correspondant aux coordonnées de vecteur d'état d'intérêt :

$$A_{SUB(j_1, \dots j_2)} = \begin{vmatrix} \bar{0} \\ H^{\bullet}_{j_1} \\ \vdots \\ H^{\bullet}_{j_2} \\ \bar{0} \end{vmatrix}$$

avec P, la matrice de corrélation et de poids entre les mesures et S = I-HH*.

**13.** Système pour fournir une solution de position de navigation GNSS d'au moins une unité mobile avec une intégrité garantie dans des environnements non contrôlés, un environnement non contrôlé étant un environnement où des hypothèses d'un modèle de bruit de mesures a priori et d'une unique mesure défaillante comme le pire des cas ne sont pas tous deux applicables ; ladite intégrité garantie étant basée sur des niveaux de protection, dans lequel ladite au moins une unité mobile (10) comprend :

- un récepteur GPS/SBAS (11) pour recevoir un signal de système mondial de navigation par satellite (GNSS) (1),
- des moyens pour traiter ledit signal GNSS pour obtenir des mesures de pseudo-distances et de phase des porteuses,
- des moyens pour exécuter un prétraitement desdites mesures de manière à détecter et caractériser des erreurs locales dans lesdites mesures, ladite caractérisation comprenant la fourniture de limites d'erreur estimées en évaluant lesdites mesures de pseudo-distances et de phase des porteuses, et la fourniture d'un ensemble de rejets de mesures quand ladite caractérisation n'est pas possible,
- des moyens pour utiliser lesdites limites d'erreur, conjointement à celles déjà fournies par le signal lui-même concernant des erreurs de satellite et ionosphériques, pour construire dans chaque mesure un niveau de bruit estimé dans lesdites mesures comme entrée pour un algorithme de surveillance autonome de l'intégrité de récepteur (RAIM) pondéré de manière à calculer des coordonnées de position et des niveaux de protection associés, sur la base desdites mesures de pseudo-distances et de phase des porteuses.

**14.** Système selon la revendication 13, dans lequel l'unité mobile (10) comprend en outre un émetteur-récepteur de télécommunication de données sans fil (13), agencé pour transmettre lesdites coordonnées de position calculées et niveaux de protection associés à une plateforme centrale (20), qui est agencée pour fournir à au moins un utilisateur autorisé (30) lesdites coordonnées de position de ladite unité mobile (20) conjointement à une information de garantie d'intégrité associée.

15. Système selon l'une quelconque des revendications 13 à 14, dans lequel ladite unité mobile (10) a des interfaces avec d'autres dispositifs externes.

16. Système selon l'une quelconque des revendications 13 à 15, dans lequel ladite unité mobile (10) a une interface avec un odomètre situé dans l'unité mobile, de manière à utiliser des mesures provenant de l'odomètre pour obtenir des estimations de position durant des interruptions de GPS et/ou Galileo.

17. Système selon l'une quelconque des revendications 13 à 16, dans lequel ladite unité mobile (10) a une interface avec un odomètre situé dans l'unité mobile, de manière à utiliser des mesures provenant de l'odomètre pour réduire l'erreur d'estimation de position.

18. Système selon l'une quelconque des revendications 13 à 17, dans lequel ledit récepteur GPS/SBAS (11) de l'unité mobile (10) est un récepteur Galileo ou Combiné GPS et Galileo.

19. Système selon l'une quelconque des revendications 13 à 18, dans lequel il fournit en outre les coordonnées de vitesse de l'unité mobile.

20. Système selon la revendication 19, dans lequel, pour le calcul de l'intégrité, le système est configuré pour considérer la vitesse de l'utilisateur mobile.

21. Système selon l'une quelconque des revendications 13 à 20, dans lequel des informations provenant de différentes unités mobiles situées dans une certaine zone limitée sont combinées pour effectuer la vérification croisée de la qualité des mesures fournies.

22. Système selon l'une quelconque des revendications 13 à 21, dans lequel la position calculée et les niveaux de protection sont combinés avec des informations GIS externes relatives aux routes et rues, vérifiées pour garantir leur intégrité.

23. Système selon la revendication 22, dans lequel lesdites informations externes sont relatives à la topographie de la surface (informations 3D).

24. Système selon l'une quelconque des revendications 14 à 23, dans lequel lesdites coordonnées de position de ladite unité mobile (10) conjointement à ladite information de garantie d'intégrité associée sont codées dans un paquet de données (MUDP), stockées dans une mémoire non volatile (15) de ladite unité mobile, qui sont transmises à la plateforme centrale (20) à certains intervalles prédéfinis.

25. Système selon l'une quelconque des revendications 14 à 23, dans lequel lesdites coordonnées de position de ladite unité mobile (10) conjointement à ladite information de garantie d'intégrité associée sont codées dans un paquet de données (MUDP), stockées dans une mémoire non volatile (15) de ladite unité mobile, qui sont transmises à la plateforme centrale (20) sur demande de la plateforme centrale.

26. Système selon l'une quelconque des revendications 14 à 23, dans lequel lesdites coordonnées de position de ladite unité mobile (10) conjointement à ladite information de garantie d'intégrité associée sont codées dans un paquet de données (MUDP), stockées dans une mémoire non volatile (15) de ladite unité mobile, qui sont transmises à la plateforme centrale (20) quand une condition géographique spécifique se produit.

FIG. 1

GNSS with Integrity Service

Wireless Telecommunication Network 14

10 Teleprogramming Commands

11 GNSS Receiver (GR)

12 On-board Processor (OBP)

13 Wireless Data Transceiver (MODEM)

MU Data Packet (MUDP) 16

15 Non-Volatile Memory

Mobile Unit (MU)

20 Central Platform

30 Users

Optional Connectivity with other Mobile Agent Sensors/Devices

**FIG. 2**

14 Wireless Telecommunication Network

20

Teleprogramming Commands

10 Mobile Unit

15 MU Data Packet (MUDP)

26 Telecommunication Front-End

LPDs Data Base 24

22 Enhanced Performance Integrity Algorithm

Data Base Manager 23

25 Business Logic Processor

27 Access Server

User's Data Base 21

30 Users

Central Platform

**FIG. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. WALTER ; P. ENGE.** Weighted RAIM for precision approach. *ION GPS,* 1995
- **Y.C. LEE ; K.L. VAN DYKE.** Analysis performed in support of the ad hoc working group of RTCA SC-159 on RAIM/FDE issues. *Proc. National Technical Meeting ION, ION NTM 2002,* January 2002
- Minimum operational performance standards for GPS/WAAS Airborne Equipment. *Appendix J,* 28 November 2001

- **R. GROVER BROWN.** Solution of the two failure GPS RAIM problem under worst case bias conditions: parity space approach. *NAVIGATION,* 1997, vol. 44
- **H. SAIRO ; J. SYRJÄRINNE ; J. LEPÄKOSKI ; J. TAKALA.** Integrity measure for assisted GPS based on weighted dilution of precision. *ION GPS 2002,* September 2002
- **R. GROVER BROWN.** Solution of the two failure GPS RAIM problem under the worst case bias conditions: parity space approach. *NAVIGATION,* 1997, vol. 44 (4